# EUROPÄISCHE PATENTSCHRIFT

(11) **EP 1 670 859 B1**
(45) Veröffentlichungstag und Bekanntmachung des Hinweises auf die Patenterteilung: **17.03.2010**
(21) Anmeldenummer: 04765382.9
(22) Anmeldetag: 18.09.2004
(51) Int. Cl.: C08L 23/22, C08F 290/04, C14C 11/00, C14C 9/00, D06M 15/227, D06M 15/27, D21H 19/20, C04B 41/48, B27K 3/15

(54) **WÄSSRIGE DISPERSIONEN VON COPOLYMERISATEN, IHRE HERSTELLUNG UND VERWENDUNG**
AQUEOUS DISPERSIONS OF COPOLYMERS, PRODUCTION THEREOF AND USE OF THE SAME
DISPERSIONS AQUEUSES DE COPOLYMERISATS, FABRICATION ET UTILISATION

(30) Priorität: 26.09.2003 DE 10345094; 14.11.2003 DE 10353557; 25.11.2003 DE 10355402
(43) Veröffentlichungstag der Anmeldung: 21.06.2006
(73) Patentinhaber: BASF SE, 67056 Ludwigshafen (DE)
(72) Erfinder: HÜFFER, Stephan, 67063 Ludwigshafen (DE); MIJOLOVIC, Darijo, 68309 Mannheim (DE); DANISCH, Peter, 67065 Ludwigshafen (DE); KLÜGLEIN, Matthias, 67071 Ludwigshafen (DE); PABST, Gunther, 92318 Neumarkt (DE); WOLF, Gerhard, 68775 Ketsch (DE)
(86) Internationale Anmeldenummer: PCT/EP2004/010491
(87) Internationale Veröffentlichungsnummer: WO 2005/030865

(56) Entgegenhaltungen:
- EP-A- 1 022 293
- WO-A-95/07944
- WO-A-96/28483
- WO-A-03/023070

## Beschreibung

Die vorliegende Erfindung betrifft wässrige Dispersionen von Copolymerisaten, erhältlich durch radikalische Copolymerisation von
(A) mindestens einem ethylenisch ungesättigten Dicarbonsäureanhydrid, abgeleitet von mindestens einer Dicarbonsäure mit 4 bis 8 C-Atomen,
(B) mindestens einem Oligomeren von Isobuten, wobei mindestens ein Oligomer ein mittleres Molekulargewicht Mₙ im Bereich von 300 bis 5000 g/mol aufweist,
(C) optional mindestens einem von (A) verschiedenen ethylenisch ungesättigten Comonomer,
und Umsetzung mit
(D) mindestens einer Verbindung der allgemeinen Formel I a oder I b 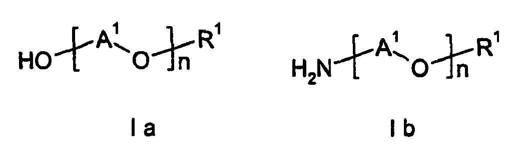
und anschließendes Versetzen mit Wasser,
wobei in Formel I a und I b die Variablen wie folgt definiert sind:
- A¹: C₂-C₂₀-Alkylen, gleich oder verschieden
- R¹: C₁-C₃₀-Alkyl, linear oder verzweigt, Phenyl oder Wasserstoff,
- n: eine ganze Zahl von 1 bis 200
und wobei der Wassergehalt im Bereich von 30 bis 99,5 Gew.-% liegt, bezogen auf wässrige Dispersion.

Weiterhin betrifft die vorliegende Erfindung ein Verfahren zur Herstellung der erfindungsgemäßen wässrigen Dispersionen sowie ihre Verwendung zur Behandlung faseriger Substrate.

Weiterhin betrifft die vorliegende Erfindung Copolymerisate, erhältlich durch radikalische Copolymerisation von
(A) mindestens einem ethylenisch ungesättigten Dicarbonsäureanhydrid, abgeleitet von mindestens einer Dicarbonsäure mit 4 bis 8 C-Atomen,
(B) mindestens einem Oligomer von Isobuten, wobei mindestens ein Oligomer ein mittleres Molekulargewicht Mₙ im Bereich von 300 bis 5000 g/mol aufweist,
(C) optional mindestens einem von (A) verschiedenen ethylenisch ungesättigten Comonomer,
und Umsetzung mit
(D) mindestens einer Verbindung der allgemeinen Formel I a oder I b 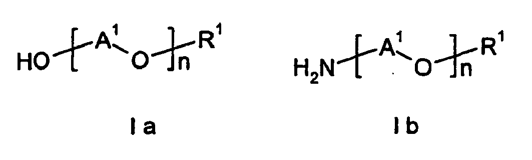
wobei in den Formeln I a und I b die Variablen wie oben stehend definiert sind.

In der Herstellung von Leder spielt neben Gebrauchseigenschaften wie Weichheit und Fülle die Hydrophobierung zum Schutz des Leders bzw. eines Lederartikels gegen Feuchtigkeit und Schmutz eine wichtige Rolle. Auch weitere Gebrauchseigenschaften des Leders wie beispielsweise der Griff werden durch Art und Weise der Hydrophobierung beeinflusst. Aber auch bei anderen faserigen Substraten wie beispielsweise Textil, Papier, Pappe, Kunstleder und Holz spielt die Hydrophobierung eine wichtige Rolle. Auch bei flächigen Substraten beispielsweise aus Beton oder von Ziegeln ist die Imprägnierung ein wichtiges Arbeitsgebiet.

Aus WO 95/07944 sind Copolymerisate von 20 bis 60 mol-% monoethylenisch ungesättigten C₄-C₆-Dicarbonsäuren bzw. deren Anhydriden mit 10 bis 70 mol-%.mindestens eines Oligomers des Propens oder eines verzweigten 1-Olefins, beispielsweise Isobuten, und 1 bis 50 mol-% mindestens einer monoethylenisch ungesättigten Verbindung, die mit den vorstehend genannten Monomeren polymerisierbar ist wie beispielsweise Vinyl- und Alkylallylethem bekannt sowie deren Verwendung zur Herstellung öllöslicher Reaktionsprodukte, die sich als Additiv für Schmierstoffe und Kraftstoffe eignen.

Aus WO 90/03359 und EP-A 0 657 475 sind alternierende Copolymere aus Maleinsäureanhydrid und Polyisobuten bekannt, die nach Modifikation mit Aminen oder Polyaminen als Additiv in Schmier- und Kraftstoffen verwendet werden können.

Aus WO 01/55059 sind Terpolymere aus Maleinsäureanhydrid, einem oder mehreren Olefin mit mehr als 40 C-Atomen, beispielsweise Polyisobuten, und einem Vinylester von Carbonsäuren mit 2 bis 12 C-Atomen, sowie die Verwendung der Terpolymere als Emulgatoren für Sprengstoffe bekannt.

Aus WO 03/23070 sind Fettungsmittel für Häute bekannt, die beispielsweise Polyisobuten enthalten oder Produkte, die durch En-Reaktion aus Polyisobuten und geeigneten Enophilen hergestellt werden (S. 6, Zeile 29 ff.)

Es bestand die Aufgabe, Hydrophobiermittel für faserige Substrate bereit zu stellen, die einen guten Schutz gegen Feuchtigkeit bei gleichzeitig angenehmem Griff der hydrophobierten Substrate ermöglichen. Weiterhin bestand die Aufgabe, ein Verfahren zur Herstellung von Hydrophobiermitteln bereit zu stellen, und es bestand die Aufgabe, ein Verfahren zur Hydrophobierung faseriger Substrate unter Verwendung von neuen Hydrophobiermitteln bereit zu stellen.

Demgemäß wurden die eingangs definierten wässrigen Dispersionen von Copolymerisaten gefunden.

Unter Dispersionen von Copolymerisaten werden im Folgenden Emulsionen, Suspensionen und auch klar aussehende Lösungen von Copolymerisaten verstanden.

Erfindungsgemäße wässrige Dispersionen enthalten Copolymerisat, das erhältlich ist durch radikalische Copolymerisation von
(A) mindestens einem ethylenisch ungesättigten Dicarbonsäureanhydrid, abgeleitet von mindestens einer Dicarbonsäure mit 4 bis 8 C-Atomen, beispielsweise Maleinsäureanhydrid, Itaconsäureanhydrid, Citraconsäureanhydrid, Methylenmalonsäureanydrid, bevorzugt Itaconsäureanhydrid und Maleinsäureanhydrid und ganz besonders bevorzugt Maleinsäureanhydrid;
(B) mindestens einem Oligomeren von Isobuten, wobei mindestens ein Oligomer ein mittleres Molekulargewicht Mₙ im Bereich von 300 bis 5000 g/mol aufweist,
und
(C) optional mindestens ein von (A) verschiedenes ethylenisch ungesättigtes Comonomer,
die man mit
(D) mindestens einer Verbindung der allgemeinen Formel I a oder I b, vorzugsweise I a 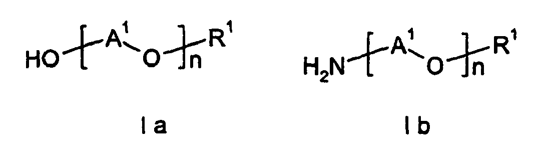
umsetzt, in der die Variablen wie folgt definiert sind:
- A¹: C₂-C₂₀-Alkylen, beispielsweise -(CH₂)₂-, -CH₂-CH(CH₃)-, -(CH₂)₃-, -CH₂-CH(C₂H₅)-, -CH₂-CH(*iso*-C₃H₇)-, -CH₂CH(*n*-C₄H₉)-, -(CH₂)₄-, -(CH₂)₅-, -(CH₂)₆-, vorzugsweise C₂-C₄-Alkylen; insbesondere -(CH₂)₂-, -CH₂CH(CH₃)- und -CH₂-CH(C₂H₅)-;
- R¹: Phenyl,
Wasserstoff
oder vorzugsweise C₁-C₃₀-Alkyl, linear oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Hexadecyl, n-Octadecyl, n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl, ganz besonders bevorzugt Methyl.
- n: eine ganze Zahl im Bereich von 1 bis 200, bevorzugt 4 bis 50;

Die Gruppen A¹ können natürlich nur dann verschieden sein, wenn n eine Zahl größer 1 ist oder wenn man verschiedene Verbindungen der allgemeinen Formel (D) einsetzt.

In einer Ausführungsform der vorliegenden Erfindung setzt man Mischungen von verschiedenen Komponenten (D) beispielsweise der Formel I a ein. Insbesondere kann man solche Mischungen an Verbindungen der Formel I a einsetzen, in denen - bezogen jeweils auf die Mischung - mindestens 95 mol-%, bevorzugt mindestens 98 mol-% bis maximal 99,8 mol-% R¹ für C₁-C₃₀-Alkyl steht und mindestens 0,2 mol-% und maximal 5 mol-%, bevorzugt maximal 2 mol-% für Wasserstoff.

In einer Ausführungsform der vorliegenden Erfindung versetzt man nach der radikalischen Copolymerisation und gegebenenfalls der Umsetzung mit (D) mit Wasser, wobei das Wasser noch Brønsted-Säure oder bevorzugt Brønsted-Base enthalten kann. Beispiele für Brønsted-Säuren sind Schwefelsäure, Salzsäure, Weinsäure und Zitronensäure. Beispiele für Brønsted-Base sind Alkalimetallhydroxid wie beispielsweise NaOH und KOH, Alkalimetallcarbonat wie beispielsweise Na₂CO₃ und K₂CO₃, Alkalimetallhydrogencarbonat wie beispielsweise NaHCO₃ und KHCO₃, Ammoniak, Amine wie beispielsweise Trimethylamin, Triethylamin, Diethylamin, Ethanolamin, N,N-Diethanolamin, N,N,N-Triethanolamin, N-Methylethanolamin.

In einer anderen Ausführungsform der vorliegenden Erfindung kann man bereits während der radikalischen Copolymerisation mit Wasser versetzen.

Erfindungsgemäße Dispersionen haben einen Wassergehalt im Bereich von 30 bis 99,5 Gew.-%, bezogen auf das Gesamtgewicht der erfindungsgemäßen Dispersion, bevorzugt im Bereich von 60 bis 90 Gew.-%.

Als Comonomere (B) kommen Oligomere des Isobutens, wobei mindestens ein Oligomer ein mittleres Molekulargewicht Mₙ im Bereich von 300 bis 5000 g/mol aufweist.

Besonders bevorzugte Comonomere (B) sind Oligoisobutene mit einem mittleren Molekulargewicht Mₙ im Bereich von 400 bis 3000 g/mol, besonders bevorzugt von 500 bis 2300 g/mol, ganz besonders bevorzugt von 550 bis 1200, insbesondere bis 1000 g/mol, beispielsweise bestimmt mittels Gelpermeations-chromatographie (GPC). Besonders bevorzugte Oligoisobutene sind weiterhin solche, die durch Oligomerisierung von mindestens 3, bevorzugt mindestens 4 Äquivalenten Isobuten erhältlich sind.

In einer Ausführungsform der vorliegenden Erfindung weisen Comonomere (B) eine Polydispersität im Bereich von 1,1 bis 10, bevorzugt bis 3, und besonders bevorzugt von 1,5 bis 1,8 auf.

In einer Ausführungsform der vorliegenden Erfindung weisen Comonomere (B) eine Polydispersität M_{w}/Mₙ im Bereich von 1,1 bis 3, bevorzugt von 1,5 bis 1,8 auf.

In einer speziellen Ausführungsform der vorliegenden Erfindung weist Oligomer (B) eine bimodale Molekulargewichtsverteilung auf mit einem Maximum von Mₙ im Bereich von 500 bis 1200 g/mol und einem lokalen Maximum von Mₙ im Bereich von 2000 bis 5000 g/mol.

Oligoisobutene sind als solche bekannt, Oligoisobutene sind beispielsweise durch Oligomerisierung von Isobuten in Gegenwart eines Bortrifluorid-Katalysators erhältlich, s. z.B. DE-A 27 02 604. Als Isobuten-haltige Einsatzstoffe eignen sich sowohl Isobuten selber als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern oder sog. FCC-Crackern (FCC: Fluid Catalysed Cracking), sofern betreffende C₄-Schnitte weitgehend von darin enthaltenem 1,3-Butadien befreit sind. Typischerweise liegt die Konzentration von Isobuten in C₄-Kohlenwasser-stoffströmen im Bereich von 40 bis 60 Gew.-%. Geeignete C₄-Kohlenwasserstoffströme sollten in der Regel weniger als 500 ppm, vorzugsweise weniger als 200 ppm 1,3-Bu-tadien enthalten.

Besondere Beispiele für Verbindungen der allgemeinen Formel I a sind
- Methylendgruppenverschlossene Polyethylenglykole der Formel HO-(CH₂CH₂O)ₘ-CH₃ mit m = 1 bis 200, vorzugsweise 4 bis 100, besonders bevorzugt 4-50
- Methylendgruppenverschlossene Blockcopolymere aus Ethylenoxid, Propylenoxid und/oder Butylenoxid mit einem Molekulargewicht Mₙ von 300 bis 5000 g/mol
- Methylendgruppenverschlossene statistische Copolymere aus Ethylenoxid, Propylenoxid und/oder Butylenoxid mit einem Molekulargewicht Mₙ von 300 bis 5000 g/mol
- Alkoxylierte C₂- bis C₃₀-Alkohole, insbesondere Fettalkoholalkoxylate, Oxoalkoholalkoxylate oder Guerbet-Alkoholalkoxylate, wobei die Alkoxylierung mit Ethylenoxid, Propylenoxid und/oder Butylenoxid durchgeführt werden kann, Beispiele sind
- C₁₃-C₁₅-Oxoalkoholethoxylate mit 3 bis 30 Ethylenoxideinheiten
- C₁₃-Oxoalkoholethoxylate mit 3 bis 30 Ethylenoxideinheiten,
- C₁₂-C₁₄-Fettalkoholethoxylate mit 3 bis 30 Ethylenoxideinheiten,
- C₁₀-Oxoalkoholethoxylate mit 3 bis 30 Ethylenoxideinheiten,
- C₁₀-Guerbetalkoholethoxylate mit 3 bis 30 Ethylenoxideinheiten,
- C₄-C₂₀-Alkoholethoxylate mit 2 bis 20 Ethylenoxideinheiten, 2 bis 20 Propylenoxideinheiten und/oder 1 bis 5 Butylenoxideinheiten;
- C₉-C₁₁-Oxoalkoholalkoxylate mit 2 bis 20 Ethylenoxideinheiten, 2 bis 20 Propylenoxideinheiten und/oder 1 bis 5 Butylenoxideinheiten;
- C₁₃-C₁₅-Oxoalkoholalkoxylate mit 2 bis 20 Ethylenoxideinheiten, 2 bis 20 Propylenoxideinheiten und/oder 1 bis 5 Butylenoxideinheiten;
- C₄-C₂₀-Alkoholethoxylate mit 2 bis 20 Ethylenoxideinheiten.

Bevorzugte Beispiele für Verbindungen der Formel I b sind Methylendgruppenverschlossene Polyethylenglykolamine der Formel H₂N-(CH₂CH₂O)ₘ-CH₃ mit m = 1 bis 200, vorzugsweise 4 bis 100, besonders bevorzugt 4 bis 50.

Das oder die Monomere (C), das bzw. die optional in die in den erfindungsgemäßen Dispersionen enthaltenen Copolymerisaten copolymerisiert werden können, sind von (A) verschieden. Als bevorzugte Monomere (C) sind zu nennen:
C₃-C₈-Carbonsäurederivate der allgemeinen Formel II 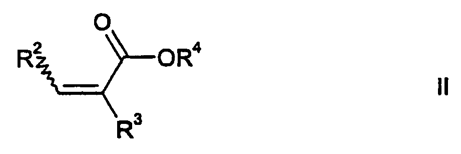
Carbonsäureamide der Formel III, 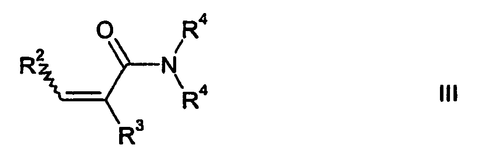 nicht-cyclische Amide der allgemeinen Formel IV a und cyclische Amide der allgemeinen Formel IV b 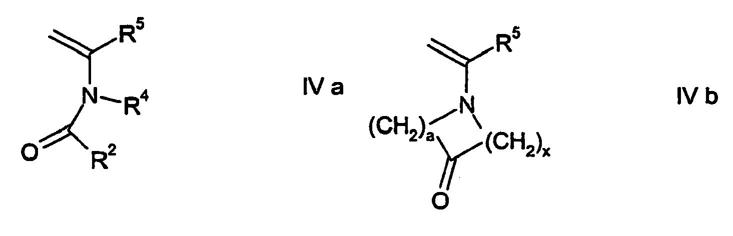 C₁-C₂₀-Alkyl-vinylether wie Methyl-vinylether, Ethyl-vinylether, n-Propyl-vinylether, iso-Propyl-vinylether, n-Butyl-vinylether, iso-Butyl-vinylether, 2-Ethylhexyl-vinylether oder n-Octadecyl-vinylether;
N-Vinyl-derivate von stickstoffhaltigen aromatischen Verbindungen, bevorzugt N-Vinylimidazol, 2-Methyl-1-vinylimidazol, N-Vinyloxazolidon, N-Vinyltriazol, 2-Vinylpyridin, 4-Vinylpyridin, 4-Vinylpyridin-N-oxid, N-Vinylimidazolin, N-Vinyl-2-methylimidazolin,
α,β-ungesättigte Nitrile wie beispielsweise Acrylnitril, Methacrylnitril;
alkoxylierte ungesättigte Ether der allgemeinen Formel V, 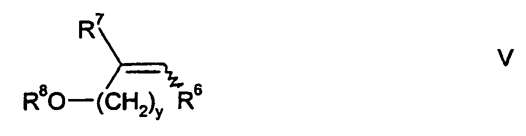
Ester und Amide der allgemeinen Formel VI, 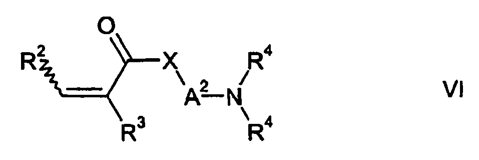
ungesättigte Ester der allgemeinen Formel VII 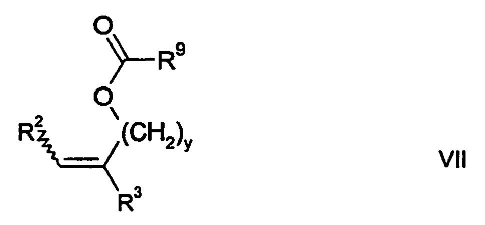
Phosphat-, phosphonat-, sulfat-, und sulfonathaltige Comonomere wie beispielsweise [2-{(Meth)acryloyloxy}-ethyl]-phosphat, 2-(Meth)acrylamido-2-methyl-1-propansulfonsäure;
α-Olefine, linear oder verzweigt, mit 3 bis 40 Kohlenstoffatomen, bevorzugt mit 4 bis 24 Kohlenstoffatomen, insbesondere Isobuten, Diisobuten, 1-Decen, 1-Dodecen, 1-Okta-decen, 1-Eicosan, α-C₂₂H₄₄, α-C₂₄H₄₈, und Gemische der vorstehend genannten α-Olefine;
vinylaromatische Verbindungen, beispielsweise der allgemeinen Formel VIII 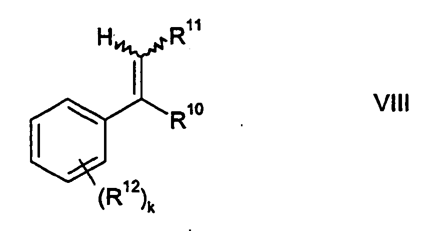
wobei die Variablen wie folgt definiert sind:
- A², A³: gleich oder verschieden und C₂-C₂₀-Alkylen, beispielsweise -(CH₂)₂-, -CH₂-CH(CH₃)-, -(CH₂)₃-, -CH₂-CH(C₂H₅)-, -CH₂-CH(*iso*-C₃H₇)-, -CH₂-CH(*n*-C₄H₉)-, -(CH₂)₄-, -(CH₂)₅-, -(CH₂)₆-, vorzugsweise C₂-C₄-Alkylen; insbesondere -(CH₂)₂-, -CH₂-CH(CH₃)- und -CH₂-CH(C₂H₅)-;
- R², R³: gleich oder verschieden und gewählt aus unverzweigten oder verzweigten C₁-C₅-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, besonders bevorzugt C₁-C₄-Alkyl wie Methyl, Ethyl, n-Propyl, iso-Propyl, n-Butyl, iso-Butyl, sec.-Butyl und tert.-Butyl;
und insbesondere Wasserstoff;
- R⁴: gleich oder verschieden und C₁-C₂₂-Alkyl, verzweigt oder unverzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl;
oder besonders bevorzugt Wasserstoff;
- R⁵: Wasserstoff oder Methyl,
- x: eine ganze Zahl im Bereich von 2 bis 6, vorzugsweise 3 bis 5;
- y: eine ganze Zahl, ausgewählt aus 0 oder 1, vorzugsweise 1;
- a: eine ganze Zahl im Bereich von 0 bis 6, vorzugsweise im Bereich von 0 bis 2;
- b: eine ganze Zahl von 1 bis 200, bevorzugt 4 bis 50;
- R⁶, R⁷: gleich oder verschieden und gewählt aus Wasserstoff, unverzweigten oder verzweigten C₁-C₁₀-Alkyl und wobei unverzweigtes und verzweigtes C₁-C₁₀-Alkyl wie oben stehend definiert ist;
- X: Sauerstoff oder N-R⁴;
- R⁸: [A³-O]_{b}-R⁴,
- R⁹: gewählt aus unverzweigten oder verzweigten C₁-C₂₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Tetradecyl, n-Hexadecyl, n-Octadecyl, n-Eicosyl; bevorzugt C₁-C₁₄-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Tetradecyl,
und insbesondere Wasserstoff oder Methyl;
- R¹⁰, R¹¹: unabhängig voneinander jeweils Wasserstoff, Methyl oder Ethyl, bevorzugt sind R¹⁰ und R¹¹ jeweils Wasserstoff;
- R¹²: Methyl oder Ethyl;
- k: eine ganze Zahl im Bereich von 0 bis 2 bedeutet, bevorzugt gilt k = 0.

Die übrigen Variablen sind wie oben stehend definiert.

Beispielhaft ausgewählte Verbindungen der Formel III sind (Meth)Acrylamide wie Acrylamid, N-Methylacrylamid, N,N-Dimethylacrylamid, N-Ethylacrylamid, N-Propylacrylamid, N-tert.-Butylacrylamid, N-tert.-Octylacrylamid, N-Undecylacrylamid oder die entsprechenden Methacrylamide.

Beispielhaft ausgewählte Verbindungen der Formel IV a sind N-Vinylcarbonsäureamide wie N-Vinylformamid, N-Vinyl-N-methylfomamid, N-Vinylacetamid oder N-Vinyl-N-methylacetamid; Beispielhaft ausgewählte Vertreter für Verbindungen der Formel IV b sind N-Vinylpyrrolidon, N-Vinyl-4-piperidon und N-Vinyl-ε-caprolactam.

Beispielhaft ausgewählte Verbindungen der Formel VI sind (Meth)acrylsäureester und -amide wie N,N-Dialkylaminoalkyl(meth)acrylate oder N,N-Dialkylaminoalkyl(meth)-acrylamide; Beispiele sind N,N-Dimethylaminoethylacrylat, N,N-Dimethylaminoethylmethacrylat, N,N-Diethylaminoethylacrylat, N,N-Diethylaminoethylmethacrylat, N,N-Dimethylaminopropylacrylat, N,N-Dimethylaminopropylmethacrylat, N,N-Di-ethylaminopropylacrylat, N,N-Diethylaminopropylmethacrylat, 2-(N,N-Dimethylamino)ethylacrylamid, 2-(N,N-Dimethylamino)ethylmethacrylamid, 2-(N,N-Diethylamino)ethylacrylamid, 2-(N,N-Diethylamino)ethylmethacrylamid, 3-(N,N-Dimethylamino)propylacrylamid und 3-(N,N-Dimethylamino)propylmethacrylamid.

Beispielhaft ausgewählte Verbindungen der Formel VII sind Vinylacetat, Allylacetat, Vinylpropionat, Vinylbutyrat, Vinyl-2-ethylhexanoat oder Vinyllaurat.

Ganz besonders bevorzugt wird als Comonomer (C) eingesetzt: Styrol, Acrylsäure, Diisobuten, 1-Dodecen, 1-Eicosen, *α*-C₂₂H₄₄, *α*-C₂₄H₄₈, Methacrylsäure, Methylacrylat, Methylmethacrylat, Acrylamid, Vinyl-n-butylether, Vinyl-iso-butylether, N-Vinylformamid, N-Vinylpyrrolidon, 1-Vinyl-imidazol und 4-Vinylpyridin.

In den erfindungsgemäßen Dispersionen enthaltene Copolymerisate können betreffend (A), (B) und gegebenenfalls (C) Blockcopolymerisate, alternierende Copolymerisate oder statistische Copolymerisate sein, wobei alternierende Copolymerisate bevorzugt sind.

In einer Ausführungsform der vorliegenden Erfindung liegen die Anhydridgruppen des Copolymerisats nach der Polymerisation vollständig oder partiell hydrolysiert und gegebenenfalls neutralisiert vor.

In einer Ausführungsform der vorliegenden Erfindung betragen die Molverhältnisse von in erfindungsgemäßen wässrigen Dispersionen dispergiertem Copolymerisat
(A) im Bereich von 5 bis 60 mol-%, bevorzugt 10 bis 55 mol-%,
(B) im Bereich von 1 bis 95 mol-%, bevorzugt 10 bis 60 mol-%,
(C) im Bereich von 0 bis 70 mol-%, bevorzugt 1 bis 50 mol-%, jeweils bezogen auf Copolymerisat, wobei die Summe aus (A), (B) und (C) 100 mol-% ergibt, und
(D) im Bereich von 0 bis 50 mol-%, bevorzugt 1 bis 30 mol-%, besonders bevorzugt 2 bis 20 Gew.-%, bezogen auf alle Carboxylgruppen von Copolymerisat.

In einer Ausführungsform der vorliegenden Erfindung haben erfindungsgemäße wässrige Dispersionen einen pH-Wert im Bereich von 3 bis 10, bevorzugt 5 bis 8.

In einer Ausführungsform der vorliegenden Erfindung haben in erfindungsgemäßen wässrigen Dispersionen dispergierte Copolymerisate eine mittlere Molmasse M_{w} im Bereich von 1000 g/mol bis 50.000 g/mol, bevorzugt 1100 bis 25.000 g/mol, bestimmt beispielsweise nach der Methode der Größenausschlusschromatographie (size exclusion chromatography) mit beispielsweise Tetrahydrofuran oder Dimethylacetamid als Lösemittel und Polymethylmethacrylat oder Polystyrol als Standard.

In einer Ausführungsform der vorliegenden Erfindung liegt die Polydispersität M_{w}/Mₙ von in erfindungsgemäßen Dispersionen dispergiertem Copolymerisat im Allgemeinen im Bereich von 1,1 bis 20, bevorzugt von 1,5 bis 10.

In einer Ausführungsform der vorliegenden Erfindung können erfindungsgemäße wässrige Dispersionen nicht einpolymerisiertes Comonomer (B) enthalten, beispielsweise in Anteilen von 1 bis zu 30 Gew.-%, bezogen auf das Gesamtgewicht an erfindungsgemäßer wässriger Dispersion.

Ein weiterer Gegenstand der vorliegenden Erfindung ist ein Verfahren zur Herstellung erfindungsgemäßer wässriger Dispersionen, im Folgenden auch erfindungsgemäßes Herstellverfahren genannt.

Zur Ausübung des erfindungsgemäßen Herstellverfahrens geht man aus von (A), (B) und gegebenenfalls (C), die man radikalisch miteinander copolymerisiert. Während oder vorzugsweise nach der Copolymerisation setzt man Wasser zu, und zwar so, dass der Wassergehalt der erfindungsgemäßen Dispersion im Bereich von 30 bis 99,5 Gew.-% Wasser liegt.

In einer Ausführungsform der vorliegenden Erfindung geht man aus von (A), (B) und gegebenenfalls (C), die man radikalisch miteinander copolymerisiert und mit (D) umsetzt. Während oder vorzugsweise nach der Copolymerisation setzt man Wasser zu, und zwar so, dass der Wassergehalt der erfindungsgemäßen Dispersion im Bereich von 30 bis 99,5 Gew.-% Wasser liegt.

In einer speziellen Ausführungsform der vorliegenden Erfindung führt man zunächst eine radikalische Copolymerisation von (A), (B) und gegebenenfalls (C) durch und setzt anschließend mit (D) um.

In einer anderen speziellen Ausführungsform der vorliegenden Erfindung führt man die radikalische Copolymerisation von (A), (B) und gegebenenfalls (C) in Gegenwart der gesamten Menge oder Anteilen der einzusetzenden Verbindung (D) durch.

In einer anderen speziellen Ausführungsform der vorliegenden Erfindung setzt man zunächst (A) und gegebenenfalls (C) mit (D) um und copolymerisiert anschließend radikalisch.

Wünscht man eine Umsetzung von Copolymerisat mit (D) oder eine radikalische Copolymerisation in Gegenwart von (D), dann berechnet man gesamte Menge an (D) so, dass man von einer vollständigen Umsetzung von (D) ausgeht und bis 50 mol-%, bevorzugt 1 bis 30 mol-%, besonders bevorzugt 2 bis 20 mol-% (D), bezogen auf alle Carboxylgruppen des Copolymerisats, einsetzt. Unter dem Begriff "alle im Polymerisat enthaltene Carboxylgruppen" sind im Rahmen der vorliegenden Erfindung diejenigen Carboxylgruppen aus einpolymerisierten Comonomeren (A) und gegebenenfalls (C) zu verstehen, die als Anhydrid, als C₁-C₄-Alkylester oder als Carbonsäure vorliegen.

Man startet die radikalische Copolymerisation vorteilhaft durch Initiatoren, beispielsweise Peroxide oder Hydroperoxide. Als Peroxide bzw. Hydroperoxide seien Di-tert.-Butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid, Dicyclohexylperoxiddicarbonat, beispielhaft genannt. Auch der Einsatz von Redoxinitiatoren ist geeignet, beispielsweise Kombinationen aus Wasserstoffperoxid oder Natriumperoxodisulfat oder einem der vorstehend genannten Peroxide mit einem Reduktionsmittel. Als Reduktionsmittel sind beispielsweise geeignet: Ascorbinsäure, Weinsäure, Fe(II)-Salze wie beispiels-weise FeSO₄, Natriumbisulfit, Kaliumbisulfit.

Geeignete Initiatoren sind außerdem Azoverbindungen wie 2,2'-Azobis(isobutyronitril), 2,2'-Azobis(2-methylpropion-amidin)dihydrochlorid und 2,2'-Azobis(4-methoxy-2,4-dimethylvaleronitril).

Im allgemeinen wird Initiator in Mengen von 0,1 bis 20 Gew.-%, vorzugsweise 0,2 bis 15 Gew.-%, berechnet auf die Masse aller Comonomeren, eingesetzt.

Man kann das erfindungsgemäße Herstellverfahren in Anwesenheit oder in Abwesenheit von Lösungsmitteln und Fällungsmitteln durchführen. Als Lösemittel für die radikalische Copolymerisation kommen polare, gegenüber Säureanhydrid inerte Lösemittel in Betracht wie z.B. Aceton, Tetrahydrofuran und Dioxan. Als Fällungsmittel eignen sich beispielsweise Toluol, ortho-Xylol, meta-Xylol und aliphatische Kohlenwasserstoffe.

In einer bevorzugten Ausführungsform arbeitet man ohne Lösungsmittel oder in Gegenwart von nur geringen Mengen an Lösungsmittel, d.h. 0,1 bis maximal 10 Gew.-%, bezogen auf die Gesamtmasse an Comonomeren (A), (B) sowie gegebenenfalls (C). Als Lösungsmittel sind unter den Bedingungen der Copolymerisation und der Veresterung beziehungsweise Amidbildung inerte Stoffe zu verstehen, insbesondere aliphatische und aromatische Kohlenwasserstoffe wie beispielsweise Cyclohexan, n-Heptan, Isododekan, Benzol, Toluol, Ethylbenzol, Xylol als Isomerengemisch, meta-Xylol, ortho-Xylol. Arbeitet man bei der Umsetzung mit (D) ohne sauren Katalysator oder verzichtet man auf die Umsetzung mit (D), so kann man die radikalische Copolymerisation und Umsetzung mit (D) auch in Lösungsmitteln, gewählt aus Ketonen wie beispielsweise Aceton, Methylethylketon, oder cyclischen oder nicht-cyclischen Ethern wie beispielsweise Tetrahydrofuran oder Di-n-Butylether durchführen.

Das erfindungsgemäße Herstellverfahren übt man vorzugsweise unter Ausschluss von Sauerstoff aus, beispielsweise in einer Stickstoff- oder Argonatmosphäre, vorzugsweise in einem Stickstoffstrom.

Für das erfindungsgemäße Herstellverfahren können übliche Apparaturen verwendet werden, z. B. Autoklaven und Kessel.

Die Reihenfolge der Zugabe der Comonomere kann man auf verschiedene Weise vornehmen.

In einer Ausführungsform des erfindungsgemäßen Verfahrens legt man eine Mischung aus (D) und (A) vor und gibt Initiator und gleichzeitig (B) und gegebenenfalls (C) zu. Dabei ist es bevorzugt, (B) und gegebenenfalls (C) nach Art eines Zulaufverfahrens zuzugeben.

In einer Ausführungsform der vorliegenden Erfindung legt man eine Mischung aus (D) und (A) vor und gibt Initiator und gleichzeitig (B) und gegebenenfalls (C) nach Art eines Zulaufverfahrens zu, wobei Initiator, (B) und gegebenenfalls (C) jeweils in (D) gelöst sind.

In einer Ausführungsform den vorliegenden Erfindung legt man eine Mischung aus (D) und (A) vor und gibt Initiator und (B) und (C) nach Art eines Zulaufverfahrens zu, wobei die Zulaufgeschwindigkeiten von (B) und (C) unterschiedlich gewählt werden.

In einer anderen Ausführungsform der vorliegende Erfindung legt man eine Mischung aus (D) und (A) vor und gibt Initiator und (B) und (C) nach Art eines Zulaufverfahrens zu, wobei die Zulaufgeschwindigkeiten von (B) und (C) gleich gewählt werden.

In einer anderen Ausführungsform der vorliegenden Erfindung legt man (B) und gegebenenfalls (C) vor und gibt Initiator und (A) nach Art eines Zulaufverfahrens zu und setzt anschließend mit (D) um.

In einer anderen Ausführungsform der vorliegenden Erfindung legt man (B) vor und gibt Initiator, (A) und gegebenenfalls (C) nach Art eines Zulaufverfahrens zu und setzt anschließend mit (D) um.

In einer anderen Ausführungsform der vorliegenden Erfindung legt man (A), (B) und gegebenenfalls (D) vor und gibt Initiator und (C) nach Art eines Zulaufverfahrens zu. (A), (B) und gegebenenfalls (D) können auch in einem Lösungsmittel vorgelegt werden. In einer Ausführungsform der vorliegenden Erfindung gibt man während der Zugabe von (B) und gegebenenfalls (C) weiteren Initiator zu.

In einer Ausführungsform der vorliegenden Erfindung liegt Temperatur für die Copolymerisation von (A), (B) und gegebenenfalls (C) liegt im Bereich von 80 bis 300°C, bevorzugt 100 bis 200°C.
Der Druck liegt beispielsweise im Bereich von 1 bis 10 bar, bevorzugt 1 bis 5 bar.

Man kann Regler einsetzen, beispielsweise C₁-bis C₄-Alkyl-Aldehyde, Ameisensäure und organische SH-Gruppen enthaltende Verbindungen, wie 2-Mercaptoethanol, 2-Mer-captopropanol, Mercaptoessigsäure, tert.-Butylmercaptan, n-Dodecylmercaptan. Polymerisationsregler werden im allgemeinen in Mengen von 0,1 bis 10 Gew.-% eingesetzt, bezogen auf die Gesamtmasse der eingesetzten Comonomeren. Bevorzugt arbeitet man ohne Einsatz von Reglern.

Man kann während der Copolymerisation einen oder mehrere Polymerisationsinhibitoren in geringen Mengen zugeben, beispielsweise Hydrochinonmonomethylether. Polymerisationsinhibitor kann man vorteilhaft mit (B) und gegebenenfalls (C) dosieren. Geeignete Mengen an Polymerisationsinhibitor sind 0,01 bis 1 Gew.-%, vorzugsweise 0,05 bis 0,5 Gew.-%, berechnet auf die Masse aller Comonomeren. Die Zugabe von Polymerisationsinhibitor ist insbesondere dann bevorzugt, wenn man die Copolymerisation bei Temperaturen über 80°C durchführt.

Nach Beendigung der Zugabe von (A) und (B), gegebenenfalls (C), gegebenenfalls (D) sowie gegebenenfalls Initiator kann man nachreagieren lassen.

Die Dauer der radikalischen Copolymerisation beträgt im Allgemeinen 1 bis 12 Stunden, bevorzugt 2 bis 9 Stunden, besonders bevorzugt 3 bis 6 Stunden.

Die Dauer der Umsetzung mit (D) kann 1 bis 12 Stunden, bevorzugt 2 bis 9 Stunden betragen, besonders bevorzugt 3 bis 6 Stunden.

Führt man das erfindungsgemäße Herstellverfahren so durch, dass man (A), (B) und gegebenenfalls (C) in Gegenwart der gesamten Menge an (D) copolymerisiert, so ist beispielsweise eine Reaktionsdauer von insgesamt 1 bis 12 Stunden, bevorzugt 2 bis 10 Stunden geeignet, besonders bevorzugt 3 bis 8.

Man kann die Umsetzung mit (D) in Abwesenheit oder auch Anwesenheit von Katalysatoren durchführen, insbesondere sauren Katalysatoren wie z.B. Schwefelsäure, Methansulfonsäure, p-Toluolsulfonsäure, n-Dodecylbenzolsulfonsäure, Salzsäure oder sauren Ionenaustauschern.

Wird die Umsetzung mit (D) in Anwesenheit von Katalysatoren durchgeführt, so kann die Dauer der Umsetzung 0,5 bis 2 Stunden betragen.

In einer weiteren Variante des beschriebenen Verfahrens führt man die Umsetzung mit (D) in Anwesenheit eines Schleppmittels durch, das mit bei der Reaktion gegebenenfalls entstehendem Wasser ein Azeotrop bildet.
Im Allgemeinen regiert unter den Bedingungen der oben beschriebenen Schritte (D) vollständig oder zu einem gewissen Prozentsatz mit den Carboxylgruppen der Anhydride (A) und gegebenenfalls den Carboxylgruppen aus (C). Im Allgemeinen bleiben weniger als 40 mol-% als nicht umgesetztes (D) zurück.

Es ist möglich, durch an sich bekannte Methoden wie beispielsweise Extraktion nicht umgesetztes (D) von nach dem erfindungsgemäßen Herstellverfahren erhältlichen Copolymerisat abzutrennen.

In einer Ausführungsform kann man auf den weiteren Schritt der Abtrennung von nicht abreagiertem (D) von den erfindungsgemäß hergestellten Copolymerisaten verzichten. In dieser Ausführungsform setzt man Polymerisate zusammen mit einem gewissen Prozentsatz an nicht abreagiertem (D) zur Behandlung von faserigen Substraten ein.

Durch die oben beschriebene Copolymerisation erhält man Copolymerisate. Die anfallenden Copolymerisate kann man einer Reinigung nach konventionellen Methoden unterziehen, beispielsweise Umfällen oder extraktiver Entfernung nicht-umgesetzter Monomere. Wenn ein Lösemittel oder Fällungsmittel eingesetzt wurde, so ist es möglich, dieses nach beendeter Copolymerisation zu entfernen, beispielsweise durch Abdestillieren.

Im Rahmen der vorliegenden Erfindung versetzt man wie oben beschrieben hergestelltes Copolymerisat mit Wasser, und zwar berechnet man die Menge an zugesetztem Wasser so, dass man erfindungsgemäße Dispersion erhält, die einen Wassergehalt im Bereich von 30 bis 99,5 Gew.-%, bezogen auf die Gesamtmasse an erfindungsgemäßer Dispersion aufweisen.

In einer Ausführungsform der vorliegenden Erfindung versetzt man nach der radikalischen Copolymerisation und der Umsetzung mit (D) mit Wasser, wobei das Wasser noch Brønsted-Säure oder bevorzugt Brønsted-Base enthalten kann. Beispiele für Brønsted-Säuren sind Schwefelsäure, Salzsäure, Weinsäure und Zitronensäure. Beispiele für Bronsted-Base sind Alkalimetallhydroxid wie beispielsweise NaOH und KOH, Alkalimetallcarbonat wie beispielsweise Na₂CO₃ und K₂CO₃, Alkalimetallhydrogencarbonat wie beispielsweise NaHCO₃ und KHCO₃, Ammoniak, Amine wie beispielsweise Trimethylamin, Triethylamin, Diethylamin, Ethanolamin, N,N-Diethanolamin, N,N,N-Triethanolamin, N-Methylethanolamin. Die Konzentration an Brønsted-Säure oder bevorzugt Brønsted-Base beträgt im Allgemeinen 1 bis 20 Gew.-%, bezogen auf die Summe aus Wasser und Brønsted-Säure bzw. Wasser und Brønsted-Base.

Man kann bereits während der radikalischen Copolymerisation Wasser zusetzen, vorzugsweise setzt man jedoch erst gegen Ende der radikalischen Copolymerisation Wasser zu. Hat man die radikalische Copolymerisation und die Umsetzung mit (D) in Gegenwart von Lösungsmittel durchgeführt, so ist es bevorzugt, zunächst Lösungsmittel zu entfernen, beispielsweise durch Abdestillieren und erst danach mit Wasser zu versetzen.

In einer speziellen Ausführungsform der vorliegenden Erfindung entfernt man das Lösungsmittel nach der Umsetzung mit Wasser durch beispielsweise Wasserdampfdestillation.

Durch das Versetzen mit Wasser, das gegebenenfalls Brønsted-Säure oder bevorzugt Brønsted-Base enthalten kann, können die im Copolymerisat vorhandenen Carbonsäureanhydridgruppen partiell oder vollständig hydrolysiert werden.

Nach dem Versetzen mit Wasser, das gegebenenfalls Brønsted-Säure oder bevorzugt Brønsted-Base enthalten kann, kann man bei Temperaturen im Bereich von 20 bis 100°C, bevorzugt bis 90°C nachreagieren lassen, und zwar für einen Zeitraum von 10 Minuten bis 4 Stunden.

In einer Ausführungsform der vorliegenden Erfindung legt man Wasser, wobei das Wasser noch Brønsted-Säure oder bevorzugt Brønsted-Base enthalten kann, bei 50 bis 100 °C vor und gibt nach Art eines Zulaufverfahrens gegebenenfalls auf 50 bis 100°C erwärmtes Copolymerisat zu.

In einer weiteren Ausführungsform der vorliegenden Erfindung legt man Copolymerisat bei 50 bis 100 °C vor und gibt nach Art eines Zulaufverfahrens das gegebenenfalls auf 50 bis 100 °C erwärmte Wasser zu, wobei das Wasser noch Brønsted-Säure oder bevorzugt Brønsted-Base enthalten kann.

In einer Ausführungsform der vorliegenden Erfindung legt man eine Mischung aus Wasser, wobei das Wasser noch Brønsted-Säure oder bevorzugt Brønsted-Base enthalten kann, und nichtionischem Tensid bei 50 bis 100 °C vor und gibt nach Art eines Zulaufverfahrens gegebenenfalls auf 50 bis 100 °C erwärmtes Copolymerisat zu. Als nicht-ionische Tenside kommen beispielsweise mehrfach, bevorzugt 3 bis 30-fach alkoxylierte C₁₂-C₃₀-Alkanole in Frage.

In einer weiteren Ausführungsform der vorliegenden Erfindung legt man Copolymerisat bei 50 bis 100 °C vor und gibt nach Art eines Zulaufverfahrens die gegebenenfalls auf 50 bis 100 °C erwärmte Mischung aus Wasser, wobei das Wasser noch Brønsted-Säure oder bevorzugt Brønsted-Base enthalten kann, und nichtionischem Tensid zu. Als nicht-ionisches Tensid kommt beispielsweise mehrfach, bevorzugt 3 bis 30-fach alkoxyliertes C₁₂-C₃₀-Alkanol in Frage.

Ein weiterer Gegenstand der vorliegenden Erfindung ist die Verwendung der erfindungsgemäßen wässrigen Dispersionen zur Behandlung von faserigen Substraten. Ein weiterer Gegenstand der vorliegenden Erfindung ist ein Verfahren zur Behandlung von faserigen Substraten, im Folgenden auch erfindungsgemäßes Behandlungsverfahren genannt, unter Verwendung von erfindungsgemäßen wässrigen Dispersionen.

Unter faserigen Substraten im Sinne der vorliegenden Erfindung sind zu nennen:
- Textil, worunter im Rahmen der vorliegenden Erfindung Textilfasern, textile Flächengebilde, textile Halb- und Fertigfabrikate und daraus hergestellte Fertigwaren zu verstehen sind, die neben Textilien für die Bekleidungsindustrie beispielsweise auch Teppiche und andere Heimtextilien sowie technischen Zwecken dienende textile Gebilde umfassen. Dazu gehören auch ungeformte Gebilde wie beispielsweise Flocken, linienförmige Gebilde wie Bindfäden, Fäden, Garne, Leinen, Schnüre, Seile, Zwirne sowie Körpergebilde wie beispielsweise Filze, Gewebe, Vliesstoffe und Watten. Die Textilien können natürlichen Ursprungs sein, beispielsweise Wolle, Flachs oder insbesondere Baumwolle, oder synthetisch, beispielsweise Polyamid und Polyester;
- Papier, Pappe, Kartonagen,
- Holz und Holzverbundwerkstoffe wie beispielsweise Spanplatten,
- Kunstleder, Alcantara oder Lefa, das sind Lederfaserwerkstoffe aus Lederabfällen, welche mit einem Binder oder Harz zu einem synthetisch erzeugten Fasergefüge verarbeitet werden
und besonders bevorzugt
- Leder, wobei unter Leder mit Hilfe von wahlweise Chromgerbstoffen, mineralischen Gerbstoffen, Polymergerbstoffen, synthetischen Gerbstoffen, vegetabilen Gerbstoffen, Harzgerbstoffen oder Kombinationen von mindestens zwei der vorgenannten Gerbstoffen vorgegerbte und vorzugsweise gegerbte Tierhäute zu verstehen sind.

In einer Ausführungsform der vorliegenden Erfindung handelt es sich bei Leder um mit Hilfe von Chromgerbstoffen gegerbte Tierhaut (wet blue) oder Halbzeuge.

In einer bevorzugten Ausführungsform der vorliegenden Erfindung handelt es sich bei Leder um Chrom-frei gegerbte Tierhaut (wet white) oder Halbzeuge.

Erfindungsgemäße Dispersionen kann man in der Gerbung und vorzugsweise in der Nachgerbung einsetzen, im Folgenden erfindungsgemäßes Gerbverfahren bzw. erfindungsgemäßes Nachgerbverfahren genannt. Man kann erfindungsgemäße Dispersionen in einem separaten Behandlungsschritt einsetzen

Das erfindungsgemäße Gerbverfahren übt man im Allgemeinen so aus, dass man erfindungsgemäße Dispersion oder erfindungsgemäßes Copolymerisat in einer Portion oder in mehreren Portionen unmittelbar vor oder aber während des Gerbens zusetzt. Das erfindungsgemäße Gerbverfahren wird vorzugsweise bei einem pH-Wert von 2,5 bis 8, bevorzugt von 3 bis 5,5 durchgeführt, wobei man häufig beobachtet, dass der pH-Wert während der Durchführung des erfindungsgemäßen Gerbverfahrens um etwa 0,3 bis drei Einheiten ansteigt.

In einer Ausführungsform der vorliegenden Erfindung kann man den pH-Wert durch Zugabe abstumpfender Mittel um etwa 0,3 bis drei Einheiten erhöhen.

In einer anderen Ausführungsform der vorliegenden Erfindung kann man das erfindungsgemäße Gerbverfahren bei einem pH-Wert im Bereich von 4 bis 8 beginnen und erfindungsgemäßes Copolymerisat durch Zugabe einer aciden Komponente wie beispielsweise Ameisensäure bei einem pH-Wert im Bereich von 3 bis 5,5 fixieren.

Das erfindungsgemäße Gerbverfahren führt man im Allgemeinen bei Temperaturen von 10 bis 45°C, bevorzugt bei 20 bis 30°C durch. Bewährt hat sich eine Dauer von 10 Minuten bis 12 Stunden, bevorzugt sind eine bis drei Stunden. Das erfindungsgemäße Gerbverfahren kann man in beliebigen gerbereiüblichen Gefäßen durchführen, beispielsweise durch Walken in Fässern oder in gedrehten Trommeln.

In einer Variante des erfindungsgemäßen Gerbverfahrens setzt man erfindungsgemäße Dispersion oder erfindungsgemäßes Copolymerisat zusammen mit einem oder mehreren herkömmlichen Gerbstoffen ein, beispielsweise mit Chromgerbstoffen, mineralischen Gerbstoffen, bevorzugt mit Syntanen, Polymergerbstoffen oder vegetabilen Gerbstoffen, wie sie beispielsweise beschrieben sind in Ullmann's Encyclopedia of Industrial Chemistry, Band A15, Seite 259 bis 282 und insbesondere Seite 268 ff., 5. Auflage, (1990), Verlag Chemie Weinheim.

In einer Variante des erfindungsgemäßen Gerbverfahrens setzt man erfindungsgemäße Dispersion oder erfindungsgemäßes Copolymerisat zusammen mit Fettungsmitteln wie nativen Triglyceriden, Weißöl, Paraffin, Wachs, Silikonöl, des weiteren auch Emulgatoren ein.
In einer Variante des erfindungsgemäßen Gerbverfahrens setzt man erfindungsgemäße Dispersion oder erfindungsgemäßes Copolymerisat zusammen mit herkömmlichen Gerbmitteln und Fettungsmitteln, aber ohne Silikonöl ein.

Man kann im erfindungsgemäßen Gerbverfahren 0,5 bis 40 Gew.-%, bevorzugt 2 bis 20 Gew.-% erfindungsgemäße Dispersion bzw. erfindungsgemäßes Copolymerisat einsetzen, bezogen auf das Blößengewicht.

Man kann das erfindungsgemäße Verfahren zur Behandlung von Leder vorzugsweise als Verfahren zum Nachgerben von Leder unter der Verwendung von erfindungsgemäßer Dispersion oder erfindungsgemäßem Copolymerisat durchführen. Das erfindungsgemäße Nachgerbverfahren geht aus von konventionell, d.h. beispielsweise mit Chromgerbstoffen, mineralischen Gerbstoffen auf Basis von Al, Ti, Zr, Fe und Si, bevorzugt mit Polymergerbstoffen, Aldehyden, vegetabilen Gerbstoffen, Syntanen oder Harzgerbstoffen gegerbten Halbzeugen oder erfindungsgemäß wie oben beschrieben hergestellten Halbzeugen. Zur Durchführung des erfindungsgemäßen Nachgerbung lässt man erfindungsgemäßes Copolymerisat auf Halbzeuge einwirken.

Das erfindungsgemäße Nachgerbverfahren kann man unter ansonsten üblichen Bedingungen durchführen. Man wählt zweckmäßig einen oder mehrere, d.h. 2 bis 6 Einwirkschritte und kann zwischen den Einwirkschritten mit Wasser spülen. Die Temperatur bei den einzelnen Einwirkschritten liegt jeweils im Bereich von 5 bis 60°C, bevorzugt 20 bis 45°C.

Man kann im erfindungsgemäßen Nachgerbverfahren 0,5 bis 40 Gew.-%, bevorzugt 2 bis 20 Gew.-% erfindungsgemäße Dispersion bzw. erfindungsgemäßes Copolymerisat einsetzen, bezogen auf das Falzgewicht.

Natürlich kann man erfindungsgemäße Dispersion oder erfindungsgemäßes Copolymerisat im erfindungsgemäßen Gerbverfahren bzw. Nachgerbverfahren während der Nachgerbung üblicherweise verwendete Mittel zusetzen, beispielsweise Fettlicker, Polymergerbstoffe, Fettungsmittel auf Acrylat- und/oder Methacrylatbasis oder auf der Basis von Silikonen, Nachgerbstoffe auf Basis von Harz- und Vegetabilgerbstoffen, Füllstoffe, Lederfarbstoffe oder Emulgatoren oder Kombinationen aus mindestens 2 der vorgenannten Stoffen.

In einer Ausführungsform der vorliegende Erfindung übt man das erfindungsgemäße Behandlungsverfahren und bevorzugt das erfindungsgemäße Nachgerbverfahren unter Verwendung mindestens eines Oligomers von verzweigtem oder unverzweigtem C₃-C₁₀-Alken mit einem mittleren Molekulargewicht Mₙ im Bereich von 300 bis 5000 g/mol oder von Oligomer, das durch Oligomerisierung von mindestens 3 Äquivalenten C₃-C₁₀-Alken erhältlich ist, aus. Vorzugsweise entspricht mindestens ein Oligomer dem zur Herstellung von erfindungsgemäßer Dispersion bzw, erfindungsgemäßem Copolymerisat eingesetzten Comonomer (B). Das Verhältnis von einpolymerisiertem (B) zu zusätzlichem Oligomer kann im Bereich von 1 : 0,1 bis 1 : 10 liegen.

In einer Ausführungsform der vorliegenden Erfindung führt man das erfindungsgemäße Nachgerbverfahren in Anwesenheit von Emulgator durch, beispielsweise in Anwesenheit von nicht-ionischen Emulgatoren wie mehrfach, bevorzugt 3 bis 30-fach alkoxylierten C₇-C₃₀-Alkanolen. Wünscht man Emulgator einzusetzen, so kann man beispielsweise 1 bis 30 Gew.-% Emulgator, bezogen auf erfindungsgemäßes Copolymerisat, einsetzen.

In einer Ausführungsform der vorliegenden Erfindung verzichtet man im erfindungsgemäßen Nachgerbverfahren auf den Zusatz von Hydrophobierungs- oder Fettungsmitteln auf Basis von Silikonen.

Durch die erfindungsgemäße Behandlung wird faseriges Substrat hydrophobiert bzw. gefettet.

Ein weiterer Gegenstand der vorliegenden Erfindung sind faserige Substrate, bevorzugt Leder, beispielsweise Leder auf Basis von wet-white oder wet-blue und besonders bevorzugt Leder auf der Basis von wet-white, hergestellt nach dem erfindungsgemäßen Behandlungsverfahren. Sie weisen einen besonders angenehmen Griff auf.

Ein weiterer Aspekt der vorliegenden Erfindung sind Leder, hergestellt durch das erfindungsgemäße Gerbverfahren oder das erfindungsgemäße Nachgerbverfahren oder durch eine Kombination aus erfindungsgemäßem Gerbverfahren und erfindungsgemäßen Nachgerbverfahren. Die erfindungsgemäßen Leder zeichnen sich durch eine insgesamt vorteilhafte Qualität aus, beispielsweise weisen einen besonders angenehmen Griff auf und sind sehr weich und voll. Die erfindungsgemäßen Leder enthalten oben beschriebenes Copolymerisat besonders gut in Mikrobereiche der Elementarfasern penetriert.

Ein weiterer Aspekt der vorliegenden Erfindung ist die Verwendung erfindungsgemäßer Leder, beispielsweise erfindungsgemäßer Leder auf Basis von wet-white oder wetblue, bevorzugt erfindungsgemäßer Leder auf der Basis von wet-white und insbesondere erfindungsgemäßer Leder auf der Basis von wet-white, die unter Verwendung von Vegetabilgerbstoffen hergestellt wurden, zur Herstellung von Bekleidungsstücken, Möbeln oder Autoteilen. Unter Bekleidungsstücken sind im Sinne der vorliegenden Erfindung beispielsweise Jacken, Hosen, Schuhe, insbesondere Schuhsohlen, Gürtel oder Hosenträger zu nennen. Unter Möbeln sind im Zusammenhang mit der vorliegenden Erfindung alle solchen Möbel zu nennen, die Bestandteile aus Leder enthalten, beispielsweise als Sitzfläche oder an Armlehnen. Beispielhaft seien Sitzmöbel genannt wie etwa Sessel, Stühle, Sofas. Unter Autoteilen seien beispielhaft Autositze genannt.

Ein weiterer Gegenstand der vorliegenden Erfindung sind Copolymerisate, erhältlich durch radikalische Copolymerisation von
(A) mindestens einem ethylenisch ungesättigten Dicarbonsäureanhydrid, abgeleitet von mindestens einer Dicarbonsäure mit 4 bis 8 C-Atomen,
(B) mindestens einem Oligomeren von Isobuten, wobei mindestens ein Oligomer ein mittleres Molekulargewicht Mₙ im Bereich von 300 bis 5000 g/mol aufweist,
(C) optional mindestens einem von (A) verschiedenen ethylenisch ungesättigten Comonomer,
und Umsetzung mit
(D) mindestens einer Verbindung der allgemeinen Formel I a oder I b, 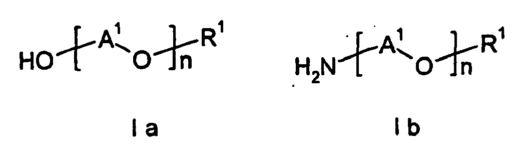
wobei in Formel I a und I b die Variablen wie folgt definiert sind:
- A¹: C₂-C₂₀-Alkylen, gleich oder verschieden
- R¹: C₁-C₃₀-Alkyl, linear oder verzweigt, Phenyl oder Wasserstoff,
- n: eine ganze Zahl von 1 bis 200.

Die Gruppen A¹ können natürlich nur dann verschieden sein, wenn n eine Zahl größer 1 ist oder wenn man verschiedene Verbindungen der allgemeinen Formel I a und/oder I b einsetzt.

In einer Ausführungsform der vorliegenden Erfindung setzt man Mischungen von verschiedenen Komponenten (D) beispielsweise der Formel I a ein. Insbesondere kann man solche Mischungen an Verbindungen der Formel I a einsetzen, in denen - bezogen jeweils auf die Mischung - mindestens 95 mol-%, bevorzugt mindestens 98 mol-% bis maximal 99,8 mol-% R¹ für C₁-C₃₀-Alkyl steht und mindestens 0,2 mol-% und maximal 5 mol-%, bevorzugt maximal 2 mol-% für Wasserstoff.

In einer Ausführungsform der vorliegenden Erfindung liegen erfindungsgemäße Copolymerisate bzw. in erfindungsgemäßen Copolymerisaten einpolymerisierte Dicarbonsäureanhydride (A) partiell oder vollständig in hydrolysierter und gegebenenfalls neutralisierter Form vor.

In einer Ausführungsform der vorliegenden Erfindung enthalten erfindungsgemäße Copolymerisate mindestens ein Comonomer (C) einpolymerisiert, das gewählt wird aus ethylenisch ungesättigten C₃-C₈-Carbonsäurederivaten der allgemeinen Formel II 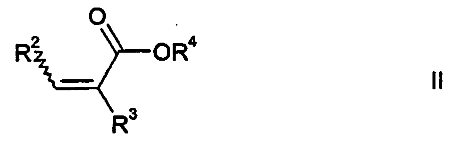 Carbonsäureamiden der Formel III, 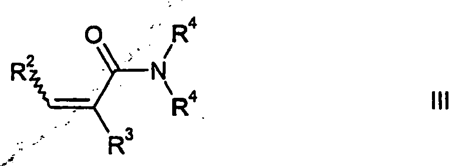 nicht-cyclischen Amiden der allgemeinen Formel IV a oder cyclischen Amiden der allgemeinen Formel IV b 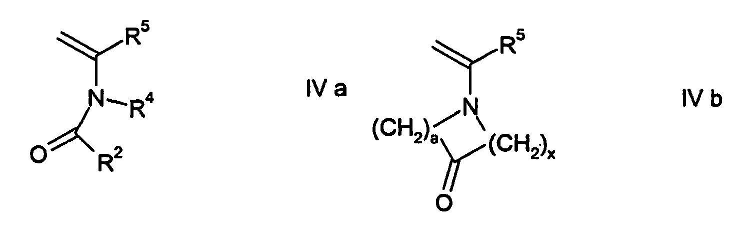 C₁-C₂₀-Alkyl-Vinylethern,
N-Vinyl-Derivaten von stickstoffhaltigen aromatischen Verbindungen,
α,β-ungesättigten Nitrilen,
alkoxylierten ungesättigten Ethern der allgemeinen Formel V 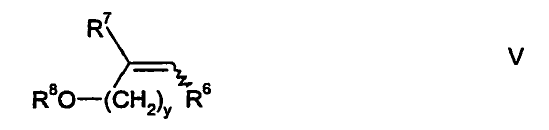 Estern oder Amiden der allgemeinen Formel VI 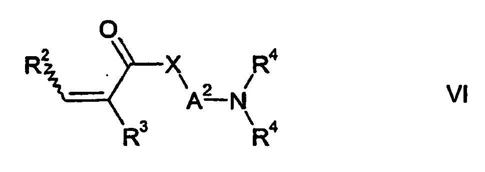 ungesättigten Estern der allgemeinen Formel VII 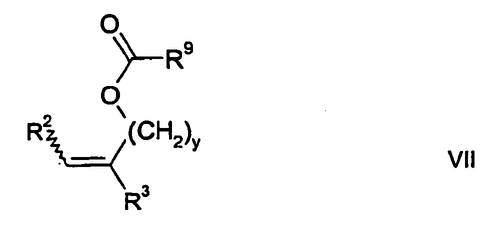 Phosphat-, Phosphonat-, Sulfat- und Sulfonatgruppen-haltige Comonomere,
α-Olefine, linear oder verzweigt, mit 3 bis 40 Kohlenstoffatomen, bevorzugt mit 4 bis 24 Kohlenstoffatomen, insbesondere Isobuten, Diisobuten, 1-Decen, 1-Dodecen, 1-Oktadecen, 1-Eicosan, α-C₂₂H₄₄, α-C₂₄H₄₈, und Gemische der vorstehend genannten α-Olefine;
vinylaromatischen Verbindungen der allgemeinen Formel VIII 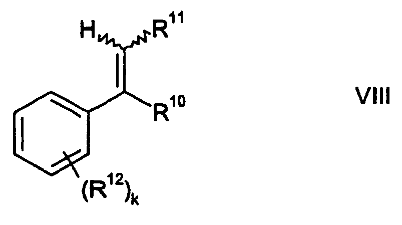 wobei in den allgemeinen Formeln die Variablen wie folgt definiert sind:
- A², A³: gleich oder verschieden und C₂-C₂₀-Alkylen,
- R², R³: gleich oder verschieden und gewählt aus Wasserstoff, unverzweigten oder verzweigten C₁-C₅-Alkyl und COOR⁴,
- R⁴: gleich oder verschieden und gewählt aus Wasserstoff oder C₁-C₂₂-Alkyl, verzweigt oder unverzweigt,
- R⁵: Wasserstoff oder Methyl,
- x: eine ganze Zahl im Bereich von 2 bis 6,
- y: eine ganze Zahl, ausgewählt aus 0 oder 1,
- a: eine ganze Zahl im Bereich von 0 bis 6,
- b: eine ganze Zahl von 1 bis 200,
- R⁶, R⁷: gleich oder verschieden und gewählt aus Wasserstoff, unverzweigten oder verzweigten C₁-C₁₀-Alkyl,
- X: Sauerstoff oder N-R⁴
- R⁸: [A³-O]_{b}-R⁴,
- R⁹: gleich oder verschieden und gewählt aus Wasserstoff, unverzweigten oder verzweigten C₁-C₁₀-Alkyl,
- R¹⁰, R¹¹: unabhängig voneinander Wasserstoff, Methyl oder Ethyl,
- R¹²: ausgewählt aus Methyl und Ethyl,
- k: eine ganze Zahl im Bereich von 0 bis 2
und die übrigen Variablen wie oben stehend definiert sind.

In einer Ausführungsform der vorliegenden Erfindung betragen die Molverhältnisse von in erfindungsgemäßem Copolymerisat einpolymerisierten Comonomer
(A) im Bereich von 5 bis 60 mol-%, bevorzugt 10 bis 55 mol-%,
(B) im Bereich von 1 bis 95 mol-%, bevorzugt 10 bis 60 mol-%,
(C) im Bereich von 0 bis 70 mol-%, bevorzugt 1 bis 50 mol-%, jeweils bezogen auf erfindungsgemäßes Copolymerisat, wobei die Summe aus (A), (B) und (C) 100 mol-% ergibt, und
(D) im Bereich von 1 bis 50 mol-%, bevorzugt 1 bis 30 mol-%, besonders bevorzugt 2 bis 20 mol-%, bezogen auf alle Carboxylgruppen des erfindungsgemäßen Copolymerisats.

In einer Ausführungsform der vorliegenden Erfindung haben erfindungsgemäße Copolymerisate eine mittlere Molmasse Mₙ im Bereich von 1000 g/mol bis 50.000 g/mol, bevorzugt 1100 g/mol bis 25.000 g/mol, bestimmt beispielsweise durch Gelpermeationschromatographie mit beispielsweise Tedrahydrofuran oder Dimethylacetamid als Lösemittel und Polymethylmethacrylat oder Polystyrol als Standard.

Erfindungsgemäße Copolymerisate können betreffend (A), (B) und gegebenenfalls (C) Blockcopolymerisate, alternierende Copolymerisate oder statistische Copolymerisate sein, wobei alternierende Copolymerisate bevorzugt sind.

Die Polydispersität M_{w}/Mₙ erfindungsgemäßer Copolymerisate liegt im Allgemeinen im Bereich von 1,1 bis 20, bevorzugt von 1,5 bis 10.

Ein weiterer Gegenstand der vorliegenden Erfindung ist ein Verfahren zur Herstellung von erfindungsgemäßen Copolymerisaten.

Ein weiterer Gegenstand der vorliegenden Erfindung ist ein Verfahren zur Herstellung erfindungsgemäßer wässriger Dispersionen, im Folgenden auch erfindungsgemäßes Herstellverfahren genannt.

Zur Ausübung des erfindungsgemäßen Herstellverfahrens geht man aus von (A), (B) und gegebenenfalls (C), die man radikalisch miteinander copolymerisiert und mit (D) umsetzt. Die Umsetzung mit (D) kann vor, während und nach der Copolymerisation erfolgen.

In einer Ausführungsform der vorliegenden Erfindung hydrolysiert man nach der radikalischen Copolymerisation und der Umsetzung mit (D) mit Wasser, wobei das Wasser noch Brønsted-Säure oder bevorzugt Brønsted-Base enthalten kann. Beispiele für Brønsted-Säuren sind Schwefelsäure, Salzsäure, Weinsäure und Zitronensäure. Beispiele für Brønsted-Base sind Alkalimetallhydroxid wie beispielsweise NaOH und KOH, Alkalimetallcarbonat wie beispielsweise Na₂CO₃ und K₂CO₃, Alkalimetallhydrogencarbonat wie beispielsweise NaHCO₃ und KHCO₃, Ammoniak, Amine wie beispielsweise Trimethylamin, Triethylamin, Diethylamin, Ethanolamin, N,N-Diethanolamin, N,N,N-Triethanolamin, N-Methylethanolamin.

Erfindungsgemäße Copolymerisate fallen üblicherweise in Form von wässrigen Dispersionen oder wässrigen Lösungen oder in Masse an. Aus erfindungsgemäßen wässrigen Dispersionen lassen sich erfindungsgemäße Copolymerisate durch dem Fachmann an sich bekannte Methoden isolieren, beispielsweise durch Verdampfen von Wasser oder durch Sprühtrocknen.

Ein weiter Aspekt der vorliegenden Erfindung ist die Verwendung von erfindungsgemäßem Copolymerisat zur Behandlung von faserigen Substraten.

Ein weiterer Gegenstand der vorliegenden Erfindung ist die Verwendung von erfindungsgemäßen wässrigen Dispersionen oder von erfindungsgemäßen Copolymerisaten zur Imprägnierung von flächigen Substraten. Ein weiterer Gegenstand der vorliegenden Erfindung ist ein Verfahren zur Imprägnierung von flächigen Substraten unter Verwendung von erfindungsgemäßen Dispersionen oder erfindungsgemäßem Copolymerisat, im Folgenden auch erfindungsgemäßes Imprägnierverfahren genannt. Das erfindungsgemäße Imprägnierverfahren kann man beispielsweise so ausführen, dass man flächige Substrate mit mindestens einer erfindungsgemäßen wässrigen Dispersion oder mindestens einem erfindungsgemäßen Copolymerisat behandelt.

Bei flächigen Substraten im Sinne der vorliegenden Erfindung kann es sich beispielsweise um Beton oder Ziegeln handeln.

Die Erfindung wird durch Arbeitsbeispiele erläutert.

### 1. Synthesevorschrift für Copolymerisation und Veresterung

Alle Reaktionen wurden - wenn nicht anders angegeben - unter einer Atmosphäre von Stickstoff durchgeführt.

Die mittlere Molmasse M_{w} der erfindungsgemäßen Copolymerisate wurde nach der Methode der Größenausschlusschromatographie mit Dimethylacetamid als Lösemittel und Polymethylmethacrylat als Standard bestimmt

### 1.1. Allgemeine Herstellvorschrift für Masse-Copolymerisation und Veresterung

Comonomer (B) und gegebenenfalls (C) gemäß Tabelle 1 wurden in einem 2-I-Kessel vorgelegt und im schwachen Stickstoffstrom auf 150 °C erhitzt. Nach Erreichen dieser Temperatur wurde innerhalb von 5 Stunden das Monomer (A) in flüssiger Form als Schmelze von ca. 70 °C und gemäß Tabelle 1 gegebenenfalls (C) und innerhalb von 5,5 Stunden die angegebene Menge Di-tert.-Butylperoxid zudosiert. Die Art der Zugabe von gegebenenfalls zugefügtem Comonomer (C) bzw. Comonomeren (C) ist Tabelle 1 zu entnehmen. Anschließend wurde eine Stunde bei 150 °C nacherhitzt.

Anschließend wurde (D) zugesetzt, wobei man das resultierende Gemisch unter Stickstoff für drei Stunden auf eine Temperatur von 150°C erhitzt.

Danach wurde die resultierende Reaktionsmischung jeweils zu erfindungsgemäßer Dispersion weiter verarbeitet.

Die resultierende Reaktionsmischung wurde auf 90 °C abgekühlt, mit wässriger Natronlauge versetzt, wobei das Molverhältnis NaOH/Maleinsäureanhydrid jeweils 0,6:1,0 betrug. Anschließend wurde 4 Stunden bei 90°C gerührt und danach auf Raumtemperatur abgekühlt Man erhielt erfindungsgemäße Dispersionen, die jeweils einen pH-Wert von 5,5 bis 6,5 aufwiesen.

Weitere Einzelheiten zu der Herstellung von erfindungsgemäßen Dispersionen finden sich in Tabelle 1.

### 1.2. Herstellvorschrift für Dispersion, enthaltend Copolymerisat 13

245 g (2,5 mol) Maleinsäureanhydrid wurden in 400 g o-Xylol in einem 2 I-Kessel mit Trockeneiskühler vorgelegt und im schwachen Stickstoffstrom auf 120°C erhitzt. Nach Erreichen dieser Temperatur wurde innerhalb von 3 Stunden 250 g (0,25 mol) Oligoisobuten (M_{w} = 1000g/mol), innerhalb von 5 Stunden 140 g (2,5 mol) Isobuten und innerhalb von 5,5 Stunden 10,4 g tert-Butylperoktoat zudosiert. Anschließend wurde 1 Stunde bei 120 °C nacherhitzt. Nach Abkühlen auf 90 °C wurden 660 g Wasser zugegeben und das o-Xylol durch Wasserdampfdestillation entfernt. Das resultierende Reaktionsgemisch wurde auf 60 °C abgekühlt und mit 400 g 25%iger Natronlauge versetzt. Anschließend wurde 1 Stunde bei 60°C gerührt und danach auf Raumtemperatur abgekühlt. Man erhielt erfindungsgemäße Disperision 13. Die erfindungsgemäße Dispersion 13 hatte einen pH-Wert von 6,9 und einen Wassergehalt von 74%. M_{w} = 10.000

**Tabelle 1: Herstellung von erfindungsgemäßen Dispersionen**

| **Dispersion, enthaltend Copolymerisat** | **Maleinsäureanhydrid (A) (mol)** | **Oligoiso buten (B) [g (mol)]** | **Weitere(s) Comonomer(e) (C) [g(mol)]** | **Art der Zugabe** | **Komponente (D) [g(mol)]** | **Zugabe wässrige NaOH [ml]** | **Peroxid [g]** | **M_{w} von Copolymerisat [g/mol]** | **pH-Wert** | **Wassergehalt Dispersion [Gew.-%]** |
|---|---|---|---|---|---|---|---|---|---|---|
| 1 | 98 | [M_{w}] = 550 | - | - | - | 2000 | 13,0 | 1120 | 5,9 | 74,7 |
| (Vergleich) | (1,00) | 550 (1,00) | | | | | | | | |
| 2 | 98 | [mm] = 550 | - | - | D1 | 3500 | 13,0 | 1550 | 5,9 | 77,0 |
| | (1,00) | 550 (1,00) | | | 500 (1,00) | | | | | |
| 3 | 39 | [M_{w}] = 550 | - | - | D1 | 2600 | 5,2 | 1400 | 5,8 | 77,3 |
| | (0,40) | 550 (1,00) | | | 175 (0,35) | | | | | |
| 4 | 20 | [mm] =550 | - | - | D1 | 2100 | 2,7 | 1390 | 6,0 | 75,8 |
| | (0,20) | 550 (1,00) | | | 90 (0,18) | | | | | |
| 5 | 98 | [mm] =550 | 1-Dodecen | Vorlage | - | 1000 | 3,4 | 8700 | 5,9 | 75,0 |
| (Vergleich) | (1,00) | 110 (0,2) | 134 (0,80) | | | | | | | |
| 6 | 98 | [M_{w}] =1000 | 1-Dodecen | Vorlage | - | 1200 | 7,0 | 10500 | 5,9 | 77,2 |
| (Vergleich) (1,00) | | 100 (0,1) | 151 (0,90) | | | | | | | |
| 7 | 98 | [M_{w}] =550 | α-C₂₀₋₂₄-Olefin | Vorlage | - | 1650 | 9,9 | 3250 | 5,9 | 76,5 |
| (Vergleich) | (1,00) | 220 (0,4) | 178 (0,60) | | | | | | | |
| 8 | 98 | [M_{w}] =550 | α-C₂₀₋₂₄-Olefin | Vorlage | D1 | 1600 | 9,9 | 4020 | 5,7 | 76,1 |
| | (1,00) | 220 (0,4) | 178 (0,60) | | 75 (0,15) | | | | | |
| 9 | 98 | [M_{w}] =550 | 1-Dodecen | Vorlage | D2 | 1800 | 6,0 | 4880 | 5,8 | 75,2 |
| | (1,00) | 220 (0,4) | 100 (0,60) | | 161 (0,30) | | | | | |
| 10 | 98 | [M_{w}] | Acrylsäure | Zulauf | - | 2200 | 7,0 | 9800 | 5,8 | 76.4 |
| (Vergleich) | (1,00) | =1000 500 (0,50) | 72 (1,00) | | | | | | | |
| 11 | 98 | [M_{w}] =550 | 1-Dodecen | Vorlage | - | 1000 | 3,5 | 10050 | 5,9 | 75,5 |
| (Vergleich) | (1,00) | 110 (0,2) | 84 (0,50) | | | | | | | |
| | | | Styrol | Zulauf | | | | | | |
| | | | 31 (0,30) | | | | | | | |
| 12 | 98 | [M_{w}] =550 | 1-Dodecen | Vorlage | D1 | 1500 | 3,5 | 12100 | 5,6 | 76,1 |
| | (1,00) | 110 (0,2) | 84 (0,50) | | 150 (0,30) | | | | | |
| | | | Styrol | Zulauf | | | | | | |
| | | | 31 (0,30) | | | | | | | |

| | | | | | | | | | | |
|---|---|---|---|---|---|---|---|---|---|---|
| D1: Polyethylenglykolmonomethylether mit einem mittleren Molekulargewicht Mₙ von 500 g/mol D2: n-C₁₅H₃₁-O-(CH₂-CH₂-O)ᵣH Angaben zu [M_{w}] sind in g/mol | | | | | | | | | | |

### 2. Anwendungstechnische Prüfung

Die Angaben in Gew.-% beziehen sich jeweils auf das Falzgewicht, wenn nicht anders angegeben.

### 2.1 Anwendung in der Nachgerbung von Leder- Herstellung von Schuhoberleder

Zwei handelsübliche Rinder-Wetblue (Fa. Packer, USA) wurden auf eine Stärke von 1,8-2,0 mm gefalzt und in acht Streifen zu je ca. 1000 g geschnitten. Anschließend wurden die Streifen in einem Fass (50 l) und einer Flottenlänge von 200 Gew.-% im Abstand von 10 Minuten mit 2 Gew.-% Natriumformiat und 0,4 Gew.-% NaHCO₃ sowie 1 Gew.-% eines Naphthalinsulfonsäure-Formaldehyd-Kondensationsprodukts, hergestellt nach US 5,186,846, Beispiel "Dispergiermittel 1", versetzt. Nach 90 Minuten wurde die Flotte abgelassen. Die Streifen wurden dann auf 7 separate Walk-Fässer verteilt.

Zusammen mit 100 Gew.-% Wasser wurden die Fässer 1 bis 7 bei 25 bis 35°C mit je 1 Gew.-% einer 50 Gew.-% (Feststoffgehalt) wässrigen Lösung von Farbstoffen dosiert, deren Feststoffe wie folgt zusammen gesetzt waren:
70 Gewichtsteile Farbstoff aus EP-B 0 970 148, Beispiel 2.18,
30 Gewichtsteile Acid Brown 75 (Eisenkomplex), Colour Index 1.7.16;
und 10 Minuten im Fass gewalkt.

Anschließend wurden wie in Tabelle 2 angegeben je 6 Gew.-% erfindungsgemäße Dispersion gemäß Tabelle 1 zugesetzt und die Mischungen 30 Minuten im Fass gewalkt. Anschließend wurden je 8 Gew.-% Sulfongerbstoff aus EP-B 0 459 168, Beispiel K1 zugesetzt und weitere 30 Minuten bei 15 Umdrehungen/min im Fass gewalkt Danach wurden die Streifen 45 Minuten mit je 3 Gew.-% Vegetabilgerbstoff Mimosa® sowie je 1,5 % der oben bezeichneten Lösung von Farbstoffen behandelt.

Anschließend wurde mit Ameisensäure auf einen pH-Wert von 3,6-3,8 abgesäuert. Nach 20 Minuten wurden die Flotten durch ein optisches Verfahren bzgl. der Auszehrung bewertet und abgelassen. Man erhielt die erfindungsgemäßen Leder 2.1.1. bis 2.1.7. Die erfindungsgemäßen Leder wurden danach mit 200 Gew.-% Wasser gewaschen. Zuletzt wurden in 100 % Wasser bei 50°C 2 Gew.-% eines Fettungsmittels dosiert, das wie unter 3. beschrieben hergestellt wurde. Nach einer Walkzeit von 45 Minuten wurde mit 1 Gew.-% Ameisensäure abgesäuert.

Die gewaschenen Leder wurden getrocknet und gestollt.

Die erfindungsgemäßen Leder 2.1.1 bis 2.1.7 wiesen ausgezeichnete Fülle und Weichheit und Griff bei vorzüglicher Durchfärbung der Fasern auf. Zusätzlich zeigen die Leder eine ausgeprägte Hydrophobierung auf, ohne dass man sie mit Hydrophobiermittel auf Basis von Silikonverbindungen behandelt hat, wobei die erfindungsgemäße Hydrophobierung den Effekt von Silikonölen noch übertreffen kann.

### Vergleichsbeispiel V1

Für Vergleichsbeispiel V1 wurde wie oben verfahren, jedoch wurde anstelle des Copolymerisats in zwei Portionen insgesamt 8 Gew.-% des Fettungsmittels aus 3. dosiert, wobei die ersten 4 Gew.-% Fettungsmittel zusammen mit Mimosa® und Lösung von Farbstoffen dosiert wurden, während die zweiten 4 Gew.-% wie oben nach der ersten Absäuerung zugesetzt wurden.

**Tabelle 2 Anwendungstechnische Prüfung von erfindungsgemäßem Leder 2.1.1 bis 2.1.7 und Vergleichsleder V1**

| **Nr.** | **Copolymerisat (Tab. 1)** | **Fülle** | **Narbenfestigkeit** | **Weichheit** | **Wasseraufnahme 2h¹ [Gew.-%]** | **Wasserdurchtritt, dynamisch²** | **Egalität Färbung** |
|---|---|---|---|---|---|---|---|
| V1 | - | 3 | 3,5 | 3 | 62 | 26 | 3 |
| 2.1.1 | 2 | 3 | 3 | 3,5 | 49 | 180 | 2,5 |
| 2.1.2 | 5 | 1,5 | 2 | 1,5 | 11 | 42.000 | 1,5 |
| 2.1.3 | 6 | 2 | 2 | 2 | 19 | 10.500 | 2 |
| 2.1.4 | 7 | 3 | 2,5 | 3 | 38 | 1200 | 3 |
| 2.1.5 | 8 | 1 | 3 | 2 | 16 | 15.000 | 2 |
| 2.1.6 | 10 | 2,5 | 3 | 3 | 43 | 240 | 3 |
| 2.1.7 | 12 | 2,5 | 2,5 | 1 | 40 | 400 | 1,5 |

### Anmerkungen:

Die Bewertung von Fülle, Narbenfestigkeit, Weichheit und Egalität der Färbung erfolgte nach einem Notensystem von 1 (sehr gut) bis 5 (mangelhaft).
1 : Bestimmung der Wasseraufnahme nach Kubelka gem. DIN 53330 (5.78), Das Leder 12, 36-37, 1961, Penetrationszeit: 2 h
2 : Bestimmung des Verhaltens gegenüber Wasser bei der dynamischen Beanspruchung, Maesertest nach ASTM D 2099,
   Das Leder 12, 38-40, 1961, Wasserdurchtritt nach Anzahl der Knickungen.
2.2 Beispiele: 2.2.1 bis 2.2.7: erfindungsgemäße Nachgerbung von wet-white-Halbzeugen

Die Haut eines Süddeutschen Rindes wurde nach einem Standardverfahren in ein entsprechendes wet-white-Halbzeug überführt, auf eine Stärke von 1,8 mm gefalzt und in Streifen zu je etwa 500 g geschnitten.

Die Halbzeugstreifen wurden in einem Fass (50 I) und einer Flottenlänge von 150 Gew.-% im Abstand von 10 Minuten mit 2 Gew.-% Natriumformiat und 0,4 Gew.-% NaHCO₃ sowie 1 Gew.-% eines Naphthalinsulfonsäure-Formaldehyd-Kondensationsprodukts, hergestellt nach US 5,186,846, Beispiel "Dispergiermittel 1", versetzt. Nach 90 Minuten wurde die Flotte abgelassen. Die Streifen wurden dann auf 7 separate Walk-Fässer verteilt.

Anschließend wurden je 10 Gew.-% erfindungsgemäße-Copolymerisatdispersion nach Tabelle 1 und 3 und je 8 Gew.-% Sulfongerbstoff aus EP-B 0 459 168, Beispiel K1 zugesetzt und über einen Zeitraum von 45 Minuten mit dem Leder gewalkt. Dann wurden 6 Gew.-% Vegetabilgerbstoff Tara (BASF Aktiengesellschaft) sowie 2 Gew.-% einer 50 Gew.-% (Feststoffgehalt) wässrigen Lösung von Farbstoffen dosiert, deren Feststoffe wie folgt zusammen gesetzt waren:
70 Gewichtsteile Farbstoff aus EP-B 0 970 148, Beispiel 2.18,
30 Gewichtsteile Acid Brown 75 (Eisenkomplex), Colour Index 1.7.16;
und weitere 2 Stunden gewalkt. Nach zwei Stunden wurde mit Ameisensäure auf einen pH-Wert von 3,6 gestellt. Schließlich setzte man je 1,5 % Lipamin® OK zu und säuerte nach einer Walkzeit von weiteren 60 Minuten mit Ameisensäure auf pH 3,2 ab. Man erhielt erfindungsgemäße Leder 2.2.1 bis 2.2.7.

Die erfindungsgemäßen Leder werden zweimal mit je 100 % Wasser gewaschen, über Nacht feucht gelagert und nach dem Abwalken auf Spannrahmen bei 50 °C getrocknet. Nach dem Stollen werden die Leder wie unten stehend beurteilt.

Die Bewertung erfolgte nach einem Notensystem von 1 (sehr gut) bis 5 (mangelhaft). Die Bewertung der Flottenauszehrung erfolgte visuell nach den Kriterien Restfarbstoff (Extinktion) und Trübung (Fettungsmittel).

Bei Beispiel 2.2.6 und 2.2.7 wurden vor der Dosierung von Lipamin® OK zusätzlich noch 1,5 Gew.-% Silikonemulsion nach 4. (siehe unten) dosiert

**Tabelle 3 Beispiele 2.2.1 bis 2.2.7**

| **Nr.** | **Copolymerisat (Tab.1)** | **Fülle** | **Narbenfestigkeit** | **Weichheit** | **Wasseraufnahme* 2 h [Gew.-%]** | **Wasserdurchtritt**, dynamisch** | **Egalität Färbung** |
|---|---|---|---|---|---|---|---|
| 2.2.1 | 12 | 2,5 | 3,5 | 2,5 | 58 | 120 | 2,5 |
| 2.2.2 *** | 5 | 2,5 | 2,5 | 1,5 | 19 | 18.000 | 1,5 |
| 2.2.3 *** | 6 | 2 | 3 | 2 | 26 | 4.300 | 2 |
| 2.2.4 *** | 7 | 3,5 | 2,5 | 3,5 | 46 | 180 | 3 |
| 2.2.5 | 8 | 1 | 2 | 2 | 34 | 7500 | 2 |
| 2.2.6 *** | 5 | 1,5 | 2,5 | 1 | 12,8 | 45.000 | 1,5 |
| 2.2.7 | 8 | 2 | 1,5 | 1 | 20,5 | 22.000 | 2 |

| | | | | | | | |
|---|---|---|---|---|---|---|---|
| * gemäß DIN 53328 ** gemäß ASTM D 2099 *** Vergleich | | | | | | | |

### 3. Herstellung eines Fettungsmittels

In einem 2-I-Kessel wurden vermischt:
230 g eines Polyisobutens mit Mₙ =1000 g/mol und M_{w} =1800 g/mol,
30 g n-C₁₈H₃₇O-(CH₂CH₂O)₂₅-OH
5 g n-C₁₈H₃₇O-(CH₂CH₂O)₈₀-OH
40 g Ölsäure
230 g sulfitiertes oxidiertes Triolein
Die Mischung wurde unter Rühren auf 60°C erwärmt und 470 g Wasser sowie 10 g n-C₁₆H₃₃O-(CH₂CH₂O)₇-OH zugesetzt. Die entstandene Emulsion wurde anschließend durch einen Spalthomogenisator geleitet. Man erhielt eine feinteilige, stabile Emulsion.

### 4. Herstellung einer Silikonemulsion

In einem 2-I-Behälter mit Rührer wurden vermischt:
150 g eines Silikons, kinematische Viskosität 600 mm²/s, der Formel 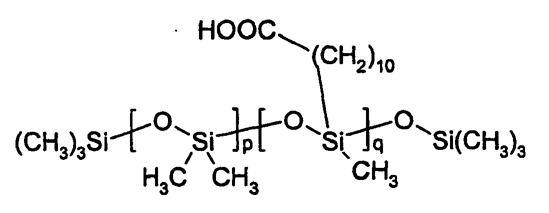 als statistisches Cokondensat mit q = 3 und p = 145 (jeweils Durchschnittswerte)
130 g N-Oleylsarkosin,
15 g NaOH (fest)
153 g Paraffingatsch (36/38°C: Shell)
450 ml Wasser
Die resultierende Silikonemulsion hatte einen pH-Wert von 8,5.

## Patentansprüche

1. Wässrige Dispersionen von Copolymerisaten, erhältlich durch radikalische Copolymerisation von
(A) mindestens einem ethylenisch ungesättigten Dicarbonsäureanhydrid, abgeleitet von mindestens einer Dicarbonsäure mit 4 bis 8 C-Atomen,
(B) mindestens einem Oligomeren von Isobuten, wobei mindestens ein Oligomer ein mittleres Molekulargewicht Mₙ im Bereich von 300 bis 5000 g/mol aufweist,
(C) optional mindestens einem von (A) verschiedenen ethylenisch ungesättigten Comonomer,
und Umsetzung mit
(D) mindestens einer Verbindung der allgemeinen Formel I a oder I b 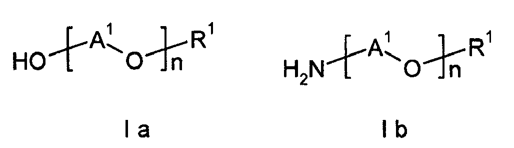 und anschließendes Versetzen mit Wasser,
wobei in Formel I a und I b die Variablen wie folgt definiert sind:
A¹ C₂-C₂₀-Alkylen, gleich oder verschieden
R¹ C₁-C₃₀-Alkyl, linear oder verzweigt, Phenyl oder Wasserstoff,
n eine ganze Zahl von 1 bis 200
und wobei der Wassergehalt im Bereich von 30 bis 99,5 Gew.-% liegt, bezogen auf wässrige Dispersion.

2. Wässrige Dispersionen nach Anspruch 1, **dadurch gekennzeichnet, dass** die Anhydridgruppen des Copolymerisats nach der Polymerisation vollständig oder partiell mit Wasser oder wässriger alkalischer Lösung hydrolysiert werden.

3. Wässrige Dispersionen nach einem der Ansprüche 1 oder 2, **dadurch gekennzeichnet, dass** die Molverhältnisse von im Copolymerisat einpolymerisierten Comonomer
(A) im Bereich von 5 bis 60 mol-%,
(B) im Bereich von 1 bis 95 mol-%,
(C) im Bereich von 0 bis 70 mol-%, jeweils bezogen auf Copolymerisat, wobei die Summe aus (A), (B) und (C) 100 mol-% ergibt, und
(D) im Bereich von 0 bis 50 mol-%, bezogen auf alle Carboxylgruppen von Copolymerisat,
liegen.

4. Wässrige Dispersionen nach einem der Ansprüche 1 bis 3, **dadurch gekennzeichnet, dass** (C) gewählt wird aus ethylenisch ungesättigten C₃-C₈-Carbonsäurederivaten der allgemeinen Formel II 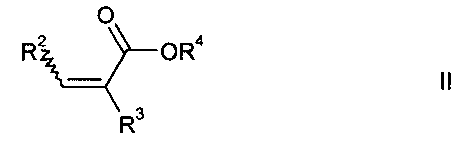 Carbonsäureamiden der Formel III, 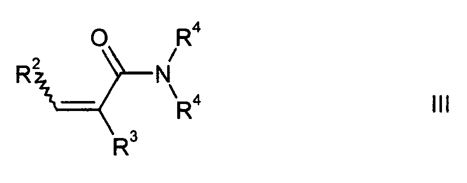 nicht-cyclischen Amiden der allgemeinen Formel IV a oder cyclischen Amiden der allgemeinen Formel IV b 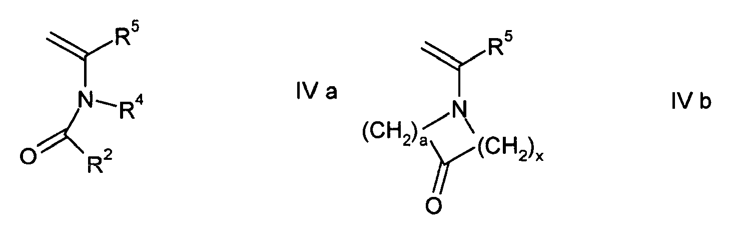 C₁-C₂₀-Alkyl-Vinylethern,
N-Vinyl-Derivaten von stickstoffhaltigen aromatischen Verbindungen,
α,β-ungesättigten Nitrilen,
alkoxylierten ungesättigten Ethern der allgemeinen Formel V 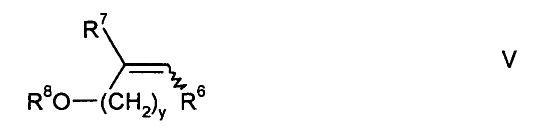 Estern oder Amiden der allgemeinen Formel VI 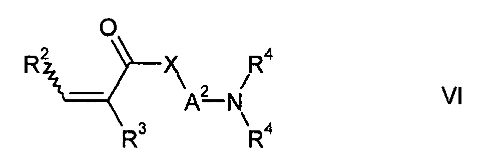 ungesättigten Estern der allgemeinen Formel VII 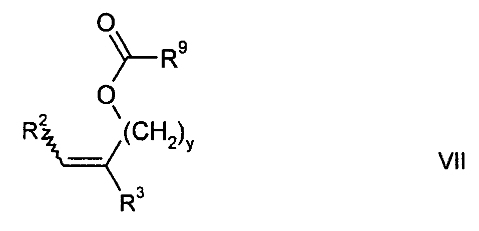 Phosphat-, Phosphonat-, Sulfat- und Sulfonatgruppen-haltigen Comonomeren.
α-Olefine mit 3 bis 40 C-Atomen,
vinylaromatischen Verbindungen der allgemeinen Formel VIII 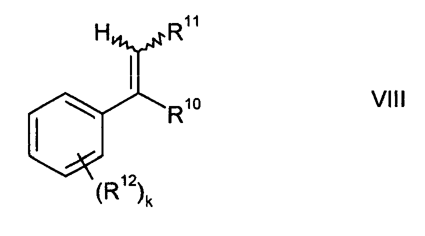 wobei in den allgemeinen Formeln die Variablen wie folgt definiert sind:
A², A³ gleich oder verschieden und C₂-C₂₀-Alkylen,
R², R³ gleich oder verschieden und gewählt aus Wasserstoff, unverzweigten oder verzweigten C₁-C₅-Alkyl und COOR⁴,
R⁴ gleich oder verschieden und gewählt aus Wasserstoff oder C₁-C₂₂-Alkyl, verzweigt oder unverzweigt,
R⁵ Wasserstoff oder Methyl,
x eine ganze Zahl im Bereich von 2 bis 6,
y eine ganze Zahl, ausgewählt aus 0 oder 1,
a eine ganze Zahl im Bereich von 0 bis 6,
b eine ganze Zahl von 1 bis 200,
R⁶, R⁷ gleich oder verschieden und gewählt aus Wasserstoff, unverzweigten oder verzweigten C₁-C₁₀-Alkyl,
X Sauerstoff oder N-R⁴
R⁸ ^{[}A³-O]_{b}-R⁴,
R⁹ gleich oder verschieden und gewählt aus Wasserstoff, unverzweigten oder verzweigten C₁-C₁₀-Alkyl,
R¹⁰ und R¹¹ unabhängig voneinander Wasserstoff, Methyl oder Ethyl,
R¹² ausgewählt aus Methyl und Ethyl,
k eine ganze Zahl im Bereich von 0 bis 2
und die übrigen Variablen wie oben stehend definiert sind.

5. Wässrige Dispersionen nach einem der Ansprüche 1 bis 4, **dadurch gekennzeichnet, dass** sie mindestens ein Oligomer von Isobuen enthalten, wobei mindestens ein Oligomer ein mittleres Molekulargewicht Mₙ im Bereich von 300 bis 5000 g/mol aufweist.

6. Verfahren zur Herstellung von wässrigen Dispersionen nach einem der Ansprüche 1 bis 5, **dadurch gekennzeichnet, dass** man (B) und (C) vorlegt, Initiator und (A) nach Art eines Zulaufverfahrens zugibt, (A), (B) und (C) miteinander radikalisch copolymerisiert, danach mit (D) umsetzt und anschließend mit Wasser versetzt.

7. Verfahren nach Anspruch 6, **dadurch gekennzeichnet, dass** man mit (D) während oder nach der Copolymerisation von (A), (B) und gegebenenfalls (C) umsetzt.

8. Verwendung von wässrigen Dispersionen nach einem der Ansprüche 1 bis 5 zur Behandlung von faserigen Substraten.

9. Verfahren zur Behandlung von faserigen Substraten unter Verwendung von wässrigen Dispersionen nach einem der Ansprüche 1 bis 5.

10. Verfahren nach Anspruch 9, **dadurch gekennzeichnet, dass** faserige Substrate gewählt werden aus Leder, Textil, Papier, Pappe, Holz, Holzverbundwerkstoffe, Kunstleder, Alcantara und Lefa.

11. Verfahren nach Anspruch 10, **dadurch gekennzeichnet, dass** es sich bei Leder um wet-white handelt.

12. Faserige Substrate, behandelt nach einem Verfahren nach Anspruch 9 bis 11.

13. Faserige Substrate nach Anspruch 12, **dadurch gekennzeichnet, dass** es sich bei Substraten um Leder handelt.

14. Leder nach Anspruch 13, **dadurch gekennzeichnet, dass** es sich um Leder auf Basis von wet-white handelt.

15. Verwendung von faserigen Substraten nach einem der Ansprüche 12 bis 14 zur Herstellung von Bekleidungsstücken oder Möbeln oder Autoteilen.

16. Copolymerisate, erhältlich durch radikalische Copolymerisation von
(A) mindestens einem ethylenisch ungesättigten Dicarbonsäureanhydrid, abgeleitet von mindestens einer Dicarbonsäure mit 4 bis 8 C-Atomen,
(B) mindestens einem Oligomeren von Isobuten, wobei mindestens ein Oligomer ein mittleres Molekulargewicht Mₙ im Bereich von 300 bis 5000 g/mol aufweist,
(C) optional mindestens einem von (A) verschiedenen ethylenisch ungesättigten Comonomer,
und Umsetzung mit
(D) mindestens einer Verbindung der allgemeinen Formel I a oder I b, 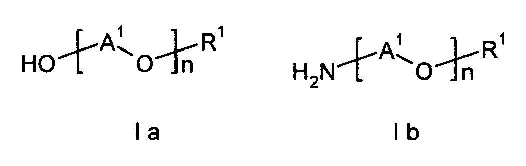
wobei in Formel I a und I b die Variablen wie folgt definiert sind:
A¹ C₂-C₂₀-Alkylen, gleich oder verschieden
R¹ C₁-C₃₀-Alkyl, linear oder verzweigt, Phenyl oder Wasserstoff,
n eine ganze Zahl von 1 bis 200
und optional Hydrolyse.

17. Copolymerisate nach Anspruch 16, **dadurch gekennzeichnet, dass** (C) gewählt wird aus ethylenisch ungesättigten C₃-C₈-Carbonsäurederivaten der allgemeinen Formel II 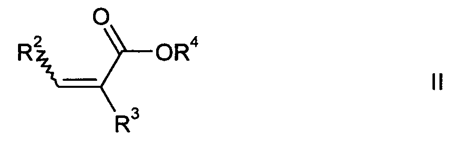 Carbonsäureamiden der Formel III, 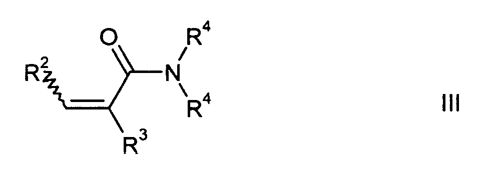 nicht-cyclischen Amiden der allgemeinen Formel IV a oder cyclischen Amiden der allgemeinen Formel IV b 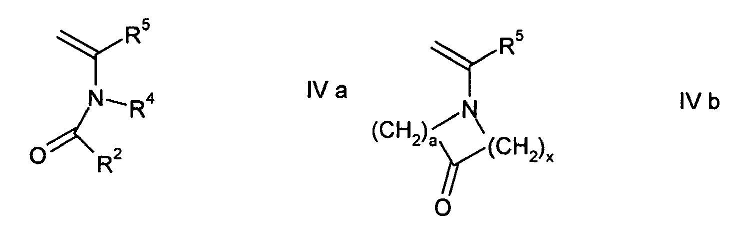 C₁-C₂₀-Alkyl-Vinylethern,
N-Vinyl-Derivaten von stickstoffhaltigen aromatischen Verbindungen,
α,β-ungesättigten Nitrilen,
alkoxylierten ungesättigten Ethern der allgemeinen Formel V 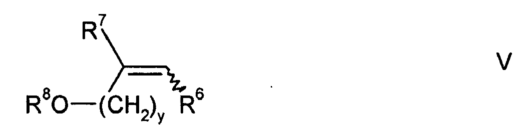 Estern oder Amiden der allgemeinen Formel VI 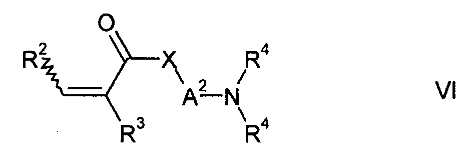 ungesättigten Estern der allgemeinen Formel VII 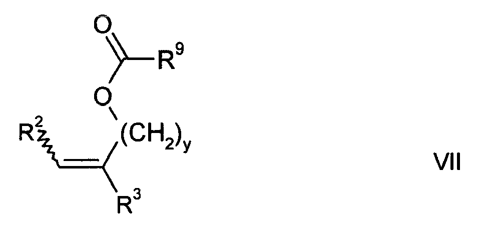 Phosphat-, Phosphonat-, Sulfat- und Sulfonatgruppen-haltige Comonomere,
α-Olefine mit 3 bis 40-C-Atomen,
vinylaromatischen Verbindungen der allgemeinen Formel VIII 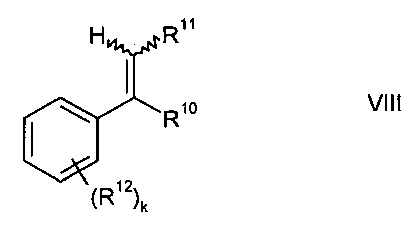 wobei in den allgemeinen Formeln die Variablen wie folgt definiert sind:
A², A³ gleich oder verschieden und C₂-C₂₀-Alkylen
R², R³ gleich oder verschieden und gewählt aus Wasserstoff, unverzweigten oder verzweigten C₁-C₅-Alkyl und COOR⁴,
R⁴ gleich oder verschieden und gewählt aus Wasserstoff oder C₁-C₂₂-Alkyl, verzweigt oder unverzweigt,
R⁵ Wasserstoff oder Methyl,
x eine ganze Zahl im Bereich von 2 bis 6,
y eine ganze Zahl, ausgewählt aus 0 oder 1,
a eine ganze Zahl im Bereich von 0 bis 6,
b eine ganze Zahl von 1 bis 200,
R⁶, R⁷ gleich oder verschieden und gewählt aus Wasserstoff, unverzweigten oder verzweigten C₁-C₁₀-Alkyl,
X Sauerstoff oder N-R⁴
R⁸ [A³-O]_{b}-R⁴,
R⁹ gleich oder verschieden und gewählt aus Wasserstoff, unverzweigten oder verzweigten C₁-C₁₀-Alkyl,
R¹⁰ und R¹¹ unabhängig voneinander Wasserstoff, Methyl oder Ethyl,
R¹² ausgewählt aus Methyl und Ethyl,
k eine ganze Zahl im Bereich von 0 bis 2
und die übrigen Variablen wie oben stehend definiert sind.

18. Verwendung von Copolymerisaten nach Anspruch 16 oder 17 zur Behandlung von faserigen Substraten.

19. Verwendung von wässrigen Dispersionen nach einem der Ansprüche 1 bis 5 oder Copolymerisaten nach Anspruch 16 oder 17 zur Imprägnierung von flächigen Substraten.

20. Verfahren zur Imprägnierung von flächigen Substraten, **dadurch gekennzeichnet, dass** man flächige Substrate mit wässrigen Dispersionen nach einem der Ansprüche 1 bis 5 oder mit Copolymerisaten nach Anspruch 16 oder 17 behandelt.

21. Verfahren nach Anspruch 20, **dadurch gekennzeichnet, dass** es sich bei flächigen Substraten um Beton oder Ziegel handelt.

## Claims

1. An aqueous dispersion of a copolymer obtainable by free radical copolymerization of
(A) at least one ethylenically unsaturated dicarboxylic anhydride, derived from at least one dicarboxylic acid of 4 to 8 carbon atoms,
(B) at least one oligomer of isobutene, at least one oligomer having an average molecular weight Mₙ of from 300 to 5 000 g/mol,
(C) optionally at least one ethylenically unsaturated comonomer differing from (A),
and reaction with
(D) at least one compound of the formula Ia or Ib 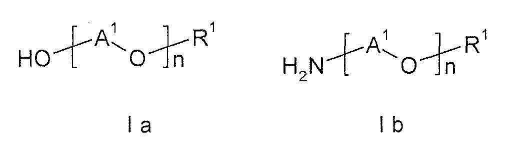
and subsequent addition of water,
where, in formulae I a and Ib,
A¹ are identical or different C₂-C₂₀-alkylene,
R¹ are linear or branched C₁-C₃₀-alkyl, phenyl or hydrogen, and
n is an integer from 1 to 200,
the water content being from 30 to 99.5% by weight, based on aqueous dispersion.

2. The aqueous dispersion according to claim 1, wherein some or all of the anhydride group of the copolymer are hydrolyzed with water or an aqueous alkaline solution after the polymerization.

3. The aqueous dispersion according to either of claims 1 and 2, wherein the molar ratios of comonomers incorporated in the form of polymerized units in the copolymer are as follows:
(A) from 5 to 60 mol%,
(B) from 1 to 95 mol%,
(C) from 0 to 70 mol%, based in each case on copolymer, the sum of (A), (B) and (C) being 100 mol%, and
(D) from 0 to 50 mol%, based on all carboxyl groups of the copolymer.

4. The aqueous dispersion according to any of claims 1 to 3, wherein (C) is selected from ethylenically unsaturated C₃-C₈-carboxylic acid derivatives of the formula II 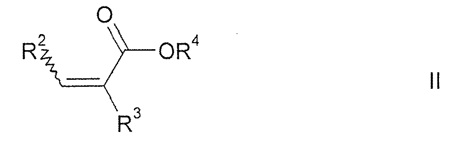 carboxamides of the formula III 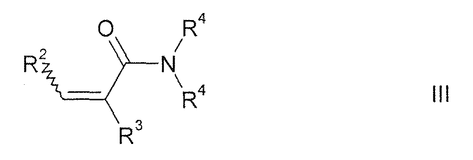 acyclic amides of the formula IV a or cyclic amides of the formula IV b 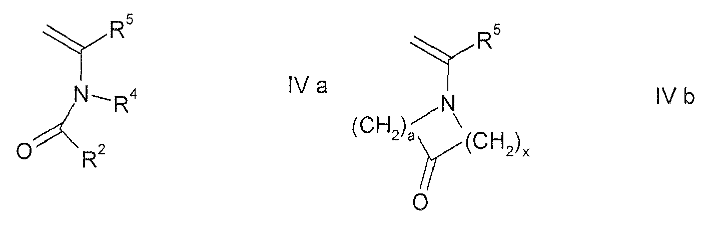 C₁-C₂₀-alkyl vinyl ethers,
N-vinyl derivatives of nitrogen-containing aromatic compounds,
α,β-unsaturated nitriles,
alkoxylated unsaturated ethers of the formula V 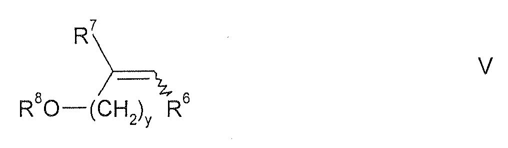 esters or amides of the formula VI 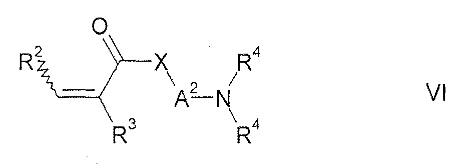 unsaturated esters of the formula VII 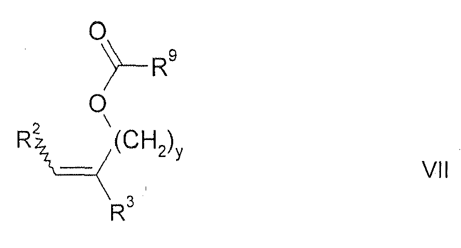 comonomers containing phosphate, phosphonate, sulfate and sulfonate groups,
α-olefins of 3 to 40 carbon atoms,
vinylaromatic compounds of the formula VIII 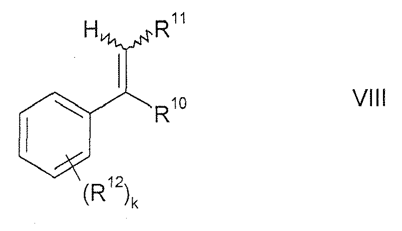 where, in the formulae,
A² and A³ are identical or different and are C₂-C₂₀-alkylene,
R² and R³ are identical or different and are selected from hydrogen, straight-chain or branched C₁-C₅-alkyl and COOR⁴,
R⁴ are identical or different and are selected from hydrogen and branched or straight-chain C₁-C₂₂-alkyl,
R⁵ is hydrogen or methyl,
x is an integer from 2 to 6,
y is an integer selected from 0 and 1,
a is an integer from 0 to 6,
b is an integer from 1 to 200,
R⁶ and R⁷ are identical or different and are selected from hydrogen and straight-chain or branched C₁-C₁₀-alkyl,
X is oxygen or N-R⁴
R⁸ is [A³-O]_{b}-R⁴,
R⁹ are identical or different and are selected from hydrogen and straight-chain or branched C₁-C₁₀-alkyl,
R¹⁰ and R¹¹, independently of one another, are hydrogen, methyl or ethyl,
R¹² is selected from methyl and ethyl,
k is an integer from 0 to 2
and the remaining variables are defined as above.

5. The aqueous dispersion according to any of claims 1 to 4, wherein it comprises at least one oligomer of isobutene, at least one oligomer having an average molecular weight Mₙ of from 300 to 5000 g/mol.

6. A process for the preparation of an aqueous dispersion according to any of claims 1 to 5, wherein (B) and (C) are initially taken, initiator and (A) are added by a feed method, (A), (B) and (C) are subjected to free radical copolymerization with one another, then reacted with (D) and then water is added.

7. The process according to claim 6, wherein reaction with (D) is effected during or after the copolymerization of (A), (B) and, if required, (C).

8. The use of an aqueous dispersion according to any of claims 1 to 5 for the treatment of fibrous substrates.

9. A process for the treatment of fibrous substrates using an aqueous dispersion according to any of claims 1 to 5.

10. The process according to claim 9, wherein fibrous substrates are selected from leather, textile, paper, board, wood, wood composites, artificial leather, alcantara and lefa.

11. The process according to claim 10, wherein the leather is wet-white.

12. A fibrous substrate treated by a process according to any of claims 9 to 11.

13. The fibrous substrate according to claim 12, wherein said substrate is leather.

14. The leather according to claim 13, wherein said leather is based on wet-white.

15. The use of a fibrous substrate according to any of claims 12 to 14 for the production of articles of clothing or pieces of furniture or automotive parts.

16. A copolymer obtainable by free radical copolymerization of
(A) at least one ethylenically unsaturated dicarboxylic anhydride, derived from at least one dicarboxylic acid of 4 to 8 carbon atoms,
(B) at least one oligomer of isobutene, at least one oligomer having an average molecular weight Mₙ of from 300 to 5 000 g/mol,
(C) optionally at least one ethylenically unsaturated comonomer differing from (A),
and reaction with
(D) at least one compound of the formula Ia or Ib 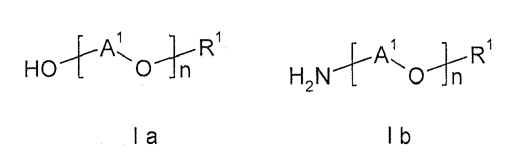
where, in formulae Ia and Ib,
A¹ are identical or different C₂-C₂₀-alkylene,
R¹ is linear or branched C₁-C₃₀-alkyl, phenyl or hydrogen, and
n is an integer from 1 to 200,
and optionally hydrolysis.

17. The copolymer according to claim 16, wherein (C) is selected from ethylenically unsaturated C₃-C₈-carboxylic acid derivatives of the formula II 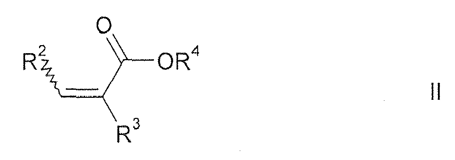 carboxamides of the formula III 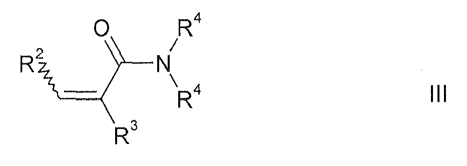 acyclic amides of the formula IV a or cyclic amides of the formula IV b 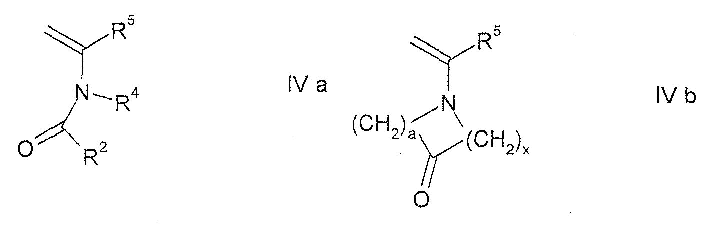 C₁-C₂₀-alkyl vinyl ethers,
N-vinyl derivatives of nitrogen-containing aromatic compounds,
α,β-unsaturated nitriles,
alkoxylated unsaturated ethers of the formula V 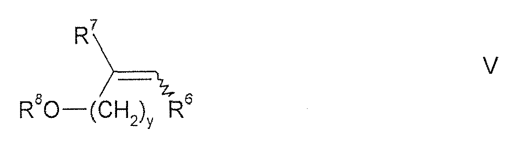 esters or amides of the formula VI 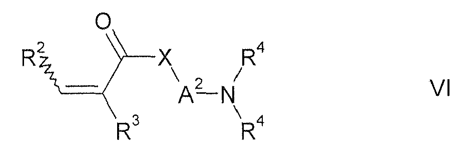 unsaturated esters of the formula VII 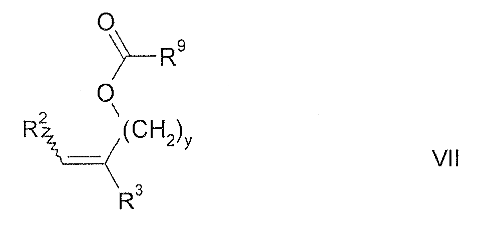 comonomers containing phosphate, phosphonate, sulfate and sulfonate groups,
α-olefins of 3 to 40 carbon atoms,
vinylaromatic compounds of the formula VIII 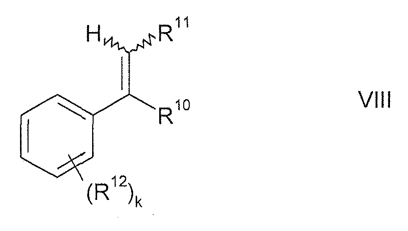 where, in the formulae,
A² and A³ are identical or different and are C₂-C₂₀-alkylene,
R² and R³ are identical or different and are selected from hydrogen, straight-chain or branched C₁-C₅-alkyl and COOR⁴,
R⁴ are identical or different and are selected from hydrogen and branched or straight-chain C₁-C₂₂-alkyl,
R⁵ is hydrogen or methyl,
x is an integer from 2 to 6,
y is an integer selected from 0 and 1,
a is an integer from 0 to 6,
b is an integer from 1 to 200,
R⁶ and R⁷ are identical or different and are selected from hydrogen and straight-chain or branched C₁-C₁₀-alkyl,
X is oxygen or N-R⁴
R⁸ is [A³-O]_{b}-R⁴,
R⁹ are identical or different and are selected from hydrogen and straight-chain or branched C₁-C₁₀-alkyl,
R¹⁰ and R¹¹, independently of one another, are hydrogen, methyl or ethyl,
R¹² is selected from methyl and ethyl,
k is an integer from 0 to 2
and the remaining variables are defined as above.

18. The use of a copolymer according to claim 16 or 17 for the treatment of fibrous substrates.

19. The use of an aqueous dispersion according to any of claims 1 to 5 or a copolymer according to claim 16 or 17 for the impregnation of sheet-like substrates.

20. A process for the impregnation of sheet-like substrates, wherein a sheet-like substrate is treated with an aqueous dispersion according to any of claims 1 to 5 or with a copolymer according to claim 16 or 17.

21. The process according to claim 20, wherein the sheet-like substrate is concrete or brick.

## Revendications

1. Dispersions aqueuses de copolymères, pouvant être obtenues par copolymérisation radicalaire de
(A) au moins un anhydride d'acide dicarboxylique éthyléniquement insaturé, dérivé d'au moins un acide dicarboxylique contenant 4 à 8 atomes C,
(B) au moins un oligomère d'isobutène, au moins un oligomère présentant un poids moléculaire moyen Mₙ dans la plage allant de 300 à 5 000 g/mol,
(C) éventuellement au moins un comonomère éthyléniquement insaturé différent de (A),
et réaction avec
(D) au moins un composé de formule générale Ia ou Ib 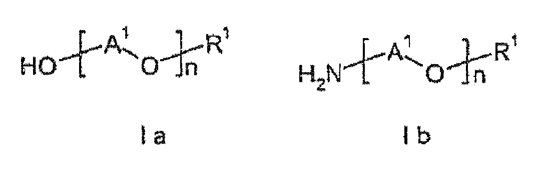
puis mélange avec de l'eau,
les variables des formules Ia et Ib étant définies de la manière suivante :
A¹ alkylène en C₂-C₂₀, identiques ou différents
R¹ alkyle en C₁-C₃₀, linéaire ou ramifié, phényle ou hydrogène,
n un nombre entier de 1 à 200
et la teneur en eau se situant dans la plage allant de 30 à 99,5 % en poids, par rapport à la dispersion aqueuse.

2. Dispersions aqueuses selon la revendication 1, **caractérisées en ce que** les groupes anhydride du copolymère sont hydrolysés en totalité ou en partie avec de l'eau ou une solution alcaline aqueuse après la polymérisation.

3. Dispersions aqueuses selon l'une quelconque des revendications 1 ou 2, **caractérisées en ce que** les rapports molaires des comonomères incorporés par polymérisation dans le copolymère sont pour
(A) dans la plage allant de 5 à 60 % en moles,
(B) dans la plage allant de 1 à 95 % en moles,
(C) dans la plage allant de 0 à 70 % en moles, à chaque fois par rapport au copolymère, la somme de (A), (B) et (C) étant de 100 % en moles, et
(D) dans la plage allant de 0 à 50 % en moles, par rapport à tous les groupes carboxyle du copolymère.

4. Dispersions aqueuses selon l'une quelconque des revendications 1 à 3, **caractérisées en ce que** (C) est choisi parmi les dérivés d'acide carboxylique en C₃-C₈ éthyléniquement insaturés de formule générale II 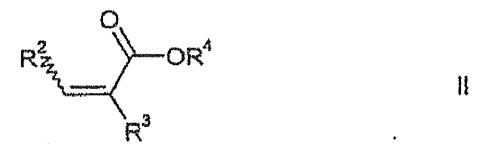 les amides d'acide carboxylique de formule III 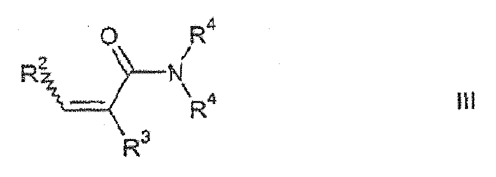 les amides non cycliques de formule générale IVa ou les amides cycliques de formule générale IVb 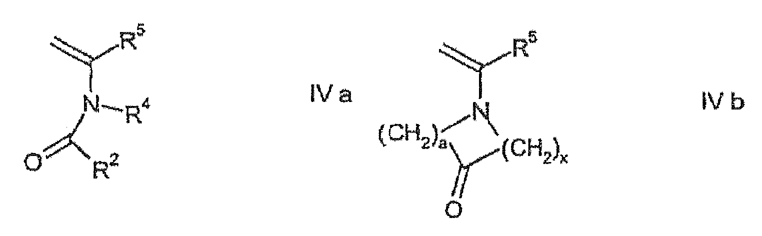 les éthers vinyliques d'alkyle en C₁-C₂₀,
les dérivés N-vinyliques de composés aromatiques contenant de l'azote,
les nitriles α,β-insaturés,
les éthers alcoxylés insaturés de formule générale V 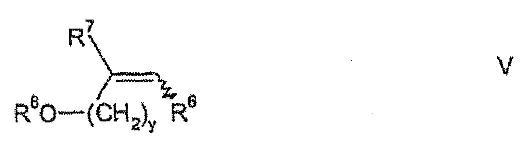 les esters ou les amides de formule générale VI 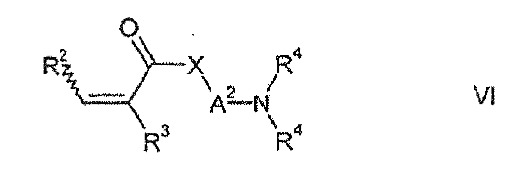 les esters insaturés de formule générale VII 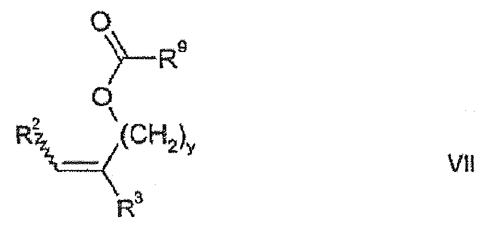 les comonomères contenant des groupes phosphate, phosphonate, sulfate et sulfonate,
les α-oléfines contenant 3 à 40 atomes C,
les composés aromatiques de vinyle de formule générale VIII 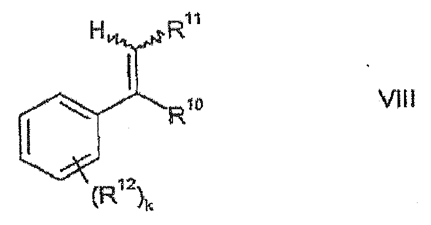 les variables des formules générales étant définies de la manière suivante :
A², A³ identiques ou différents, et alkylène en C₂-C₂₀,
R², R³ identiques ou différents, et choisis parmi hydrogène, alkyle en C₁-C₅ ramifié ou non ramifié et COOR⁴,
R⁴ identiques ou différents, et choisis parmi hydrogène ou alkyle en C₁-C₂₂ , ramifié ou non ramifié
R⁵ hydrogène ou méthyle,
x un nombre entier dans la plage allant de 2 à 6,
y un nombre entier, choisi parmi 0 ou 1,
a un nombre entier dans la plage allant de 0 à 6,
b un nombre entier de 1 à 200,
R⁶, R⁷ identiques ou différents, et choisis parmi hydrogène, alkyle en C₁-C₁₀ ramifié ou non ramifié,
X oxygène ou N-R⁴
R⁸ [A³-O]_{b}-R⁴,
R⁹ identiques ou différents, et choisis parmi hydrogène, alkyle en C₁-C₁₀ ramifié ou non ramifié,
R¹⁰ et R¹¹ indépendamment l'un de l'autre, hydrogène, méthyle ou éthyle,
R¹² choisi parmi méthyle et éthyle,
k un nombre entier dans la plage allant de 0 à 2,
les autres variables étant définies tel que précédemment.

5. Dispersions aqueuses selon l'une quelconque des revendications 1 à 4, **caractérisées en ce qu'**elles contiennent au moins un oligomère d'isobutène, au moins un oligomère présentant un poids moléculaire moyen Mₙ dans la plage allant de 300 à 5000 g/mol.

6. Procédé de fabrication de dispersions aqueuses selon l'une quelconque des revendications 1 à 5, **caractérisé en ce que** (B) et (C) sont chargés initialement, un initiateur et (A) sont introduits selon un procédé d'introduction, (A), (B) et (C) sont copolymérisés radicalairement ensemble, puis mis en réaction avec (D), et enfin mélangés avec de l'eau.

7. Procédé selon la revendication 6, **caractérisé en ce que** la réaction avec (D) est réalisée pendant ou après la copolymérisation de (A), (B) et éventuellement (C) .

8. Utilisation de dispersions aqueuses selon l'une quelconque des revendications 1 à 5, pour le traitement de substrats fibreux.

9. Procédé de traitement de substrats fibreux utilisant des dispersions aqueuses selon l'une quelconque des revendications 1 à 5.

10. Procédé selon la revendication 9, **caractérisé en ce que** les substrats fibreux sont choisis parmi le cuir, le textile, le papier, le carton, le bois, les composites de bois, le cuir synthétique, l'alcantara et le lefa.

11. Procédé selon la revendication 10, **caractérisé en ce que** le cuir est du wet-white.

12. Substrats fibreux, traités par un procédé selon les revendications 9 à 11.

13. Substrats fibreux selon la revendication 12, **caractérisés en ce que** les substrats sont du cuir.

14. Cuir selon la revendication 13, **caractérisé en ce qu'**il s'agit de cuir à base de wet-white.

15. Utilisation de substrats fibreux selon l'une quelconque des revendications 12 à 14, pour la fabrication de pièces de vêtements ou de meubles ou de pièces automobiles.

16. Copolymères, pouvant être obtenus par copolymérisation radicalaire de
(A) au moins un anhydride d'acide dicarboxylique éthyléniquement insaturé, dérivé d'au moins un acide dicarboxylique contenant 4 à 8 atomes C,
(B) au moins un oligomère d'isobutène, au moins un oligomère présentant un poids moléculaire moyen Mₙ dans la plage allant de 300 à 5 000 g/mol,
(C) éventuellement au moins un comonomère éthyléniquement insaturé différent de (A),
et réaction avec
(D) au moins un composé de formule générale Ia ou Ib 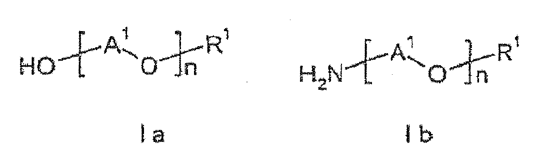
les variables des formules Ia et Ib étant définies de la manière suivante :
A¹ alkylène en C₂-C₂₀, identiques ou différents
R¹ alkyle en C₁-C₃₀, linéaire ou ramifié, phényle ou hydrogène,
n un nombre entier de 1 à 200
et éventuellement hydrolyse.

17. Copolymères selon la revendication 16, **caractérisés en ce que** (C) est choisi parmi les dérivés d'acide carboxylique en C₃-C₈ éthyléniquement insaturés de formule générale II 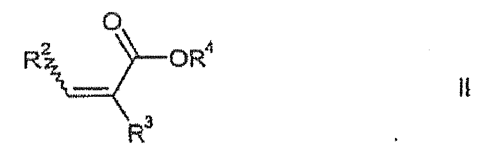 les amides d'acide carboxylique de formule III 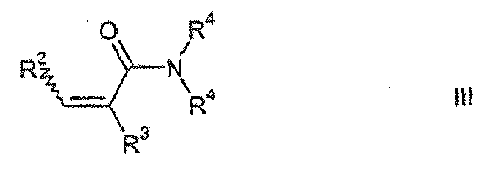 les amides non cycliques de formule générale IVa ou les amides cycliques de formule générale IVb 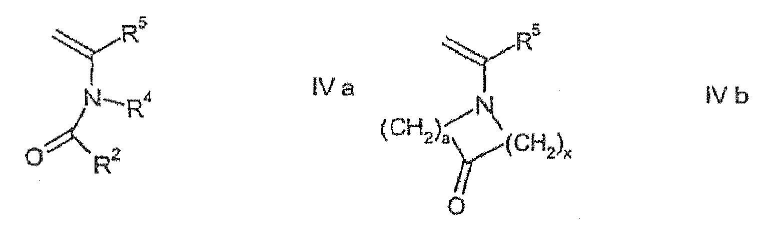 les éthers vinyliques d'alkyle en C₁-C₂₀,
les dérivés N-vinyliques de composés aromatiques contenant de l'azote,
les nitriles α,β-insaturés,
les éthers alcoxylés insaturés de formule générale V 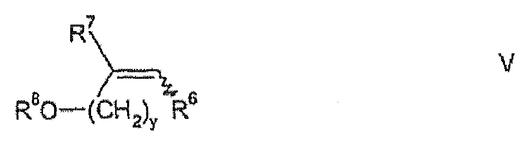 les esters ou les amides de formule générale VI 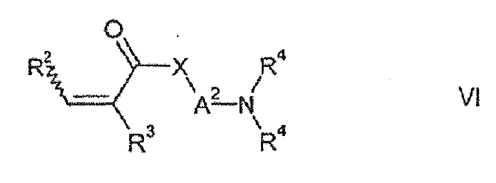 les esters insaturés de formule générale VII 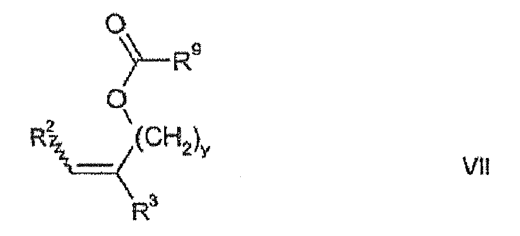 les comonomères contenant des groupes phosphate, phosphonate, sulfate et sulfonate,
les α-oléfines contenant 3 à 40 atomes C,
les composés aromatiques de vinyle de formule générale VIII 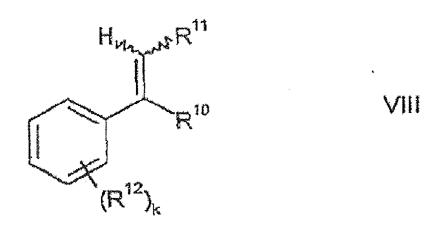 les variables des formules générales étant définies de la manière suivante :
A², A³ identiques ou différents, et alkylène en C₂-C₂₀,
R², R³ identiques ou différents, et choisis parmi hydrogène, alkyle en C₁-C₅ ramifié ou non ramifié et COOR⁴,
R⁴ identiques ou différents, et choisis parmi hydrogène ou alkyle en C₁-C₂₂, ramifié ou non ramifié
R⁵ hydrogène ou méthyle,
x un nombre entier dans la plage allant de 2 à 6,
y un nombre entier, choisi parmi 0 ou 1,
a un nombre entier dans la plage allant de 0 à 6,
b un nombre entier de 1 à 200,
R⁶, R⁷ identiques ou différents, et choisis parmi hydrogène, alkyle en C₁-C₁₀ ramifié ou non ramifié,
X oxygène ou N-R⁴
R⁸ [A³-O]_{b}-R⁴,
R⁹ identiques ou différents, et choisis parmi hydrogène, alkyle en C₁-C₁₀ ramifié ou non ramifié,
R¹⁰ et R¹¹ indépendamment l'un de l'autre, hydrogène, méthyle ou éthyle,
R¹² choisi parmi méthyle et éthyle,
k un nombre entier dans la plage allant de 0 à 2,
les autres variables étant définies tel que précédemment.

18. Utilisation de copolymères selon la revendication 16 ou 17 pour le traitement de substrats fibreux.

19. Utilisation de dispersions aqueuses selon l'une quelconque des revendications 1 à 5 ou de copolymères selon la revendication 16 ou 17 pour l'imprégnation de substrats plats.

20. Procédé d'imprégnation de substrats plats, **caractérisé en ce que** les substrats plats sont traités avec des dispersions aqueuses selon l'une quelconque des revendications 1 à 5 ou avec des copolymères selon la revendication 16 ou 17.

21. Procédé selon la revendication 20, **caractérisé en ce que** les substrats plats sont du béton ou des briques.
